(19) Europäisches Patentamt
European Patent Office
Office européen des brevets

(11) EP 4 660 253 A1

(12) EUROPEAN PATENT APPLICATION
published in accordance with Art. 153(4) EPC

(43) Date of publication:
**10.12.2025 Bulletin 2025/50**

(21) Application number: **24915495.6**

(22) Date of filing: **26.12.2024**

(51) International Patent Classification (IPC):
***C08L 101/02*** (2006.01) ***C08J 3/22*** (2006.01)
***C08K 5/00*** (2006.01) ***C08L 101/00*** (2006.01)

(52) Cooperative Patent Classification (CPC):
**C08J 3/22; C08K 5/00; C08L 101/00; C08L 101/02**

(86) International application number:
**PCT/JP2024/046196**

(87) International publication number:
**WO 2025/146806 (10.07.2025 Gazette 2025/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.01.2024 JP 2024000840**
**09.05.2024 JP 2024076663**

(71) Applicant: **Daikin Industries, Ltd.**
**Osaka-shi, Osaka 530-0001 (JP)**

(72) Inventors:
- **SAKAMI, Kazuki**
**Osaka-Shi, Osaka 530-0001 (JP)**
- **YAMATO, Takafumi**
**Osaka-Shi, Osaka 530-0001 (JP)**
- **NAKAMURA, Imari**
**Osaka-Shi, Osaka 530-0001 (JP)**
- **MASUI, Toshiaki**
**Osaka-Shi, Osaka 530-0001 (JP)**
- **TAMAI, Rina**
**Osaka-Shi, Osaka 530-0001 (JP)**
- **SUZUKI, Yuuki**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **PROCESSING AID, MASTER BATCH, THERMOPLASTIC RESIN COMPOSITION, MOLDED BODY, AND PRODUCTION METHODS THEREFOR**

(57) The disclosure aims to provide a processing aid and a masterbatch capable of improving the processibility of a thermoplastic resin, a thermoplastic resin composition and a molded article containing these, and production methods thereof. Provided is a processing aid containing: a lubricant (A); and a resin (B). The resin (B) contains a structural unit represented by the following formula 1:

$$-X-(CR^1R^2)_n-Y-(CR^3R^4)_m-Z- \quad \text{(formula 1).}$$

EP 4 660 253 A1

**Description**

TECHNICAL FIELD

The disclosure relates to processing aids, masterbatches, thermoplastic resin compositions, and molded articles, and production methods thereof.

BACKGROUND ART

In processing of melt-fabricable thermoplastic resins, rapid extrusion is required to achieve improved productivity and low cost. Still, melt-fabricable thermoplastic resin compositions inevitably have a critical shear rate and extrusion at a rate higher than this critical shear rate causes a rough surface called melt fracture, resulting in a failure in providing a good molded article.

Techniques for improving the processibility of thermoplastic resins have been proposed. For example, Patent Literature 1 proposes a technique involving use of ethylene-vinyl alcohol and Patent Literature 2 proposes a technique involving use of a surfactant and polyethylene glycol. However, the effects thereof are insufficient.

CITATION LIST

- Patent Literature

Patent Literature 1: JP H01-215840 A
Patent Literature 2: US 2023/0031000 A1

SUMMARY OF INVENTION

- Technical Problem

The disclosure aims to provide a processing aid and a masterbatch capable of improving the processibility of thermoplastic resins, as well as a thermoplastic resin composition and a molded article containing these. The disclosure also aims to provide production methods of these.

- Solution to Problem

The disclosure (1) relates to a processing aid containing: a lubricant (A); and a resin (B),

the resin (B) containing a structural unit represented by the following formula 1:

$$-X-(CR^1R^2)_n-Y-(CR^3R^4)_m-Z- \qquad \text{(formula 1)}$$

wherein X is a single bond or a divalent group optionally containing a functional group;
Y and Z are each independently a group constituted by at least one selected from the group consisting of a single bond, -O-, -C(=O)-, -C(=O)O-, -OC(=O)O-, -C(=NR')-, - C(=NR')O-, -OC(=NR')O-, -S-, -S(=O)-, -S(=O)O-, -OS(=O)O-, $-S(=O)_2-$, $-S(=O)_2O-$, $-OS(=O)_2O-$, -P(=O)-, -P(=O)O-, - OP(=O)O-, $-P(=O)_2-$, $-P(=O)_2O-$, $-OP(=O)_2PO-$, -NR'-, and - C(OR')R'-, wherein R's at respective occurrences are each independently a hydrogen atom or a C1-C10 hydrocarbon group;
$R^1$, $R^2$, $R^3$, and $R^4$ are each independently a hydrogen atom or a C1-C10 hydrocarbon group; and
n and m are each independently an integer of 0 to 10,
with at least one of X, Y, or Z being -C(=O)-, - C(=O)O-, -OC(=O)O-, or -C(OR')R'-.

The disclosure (2) relates to the processing aid according to the disclosure (1), wherein the processing aid is substantially free from fluorine.

The disclosure (3) relates to the processing aid according to the disclosure (1) or (2), wherein the lubricant (A) includes at least one selected from the group consisting of a wax, an alcohol, and a surfactant.

The disclosure (4) relates to the processing aid according to any one of the disclosures (1) to (3), wherein the lubricant (A) includes at least one selected from the group consisting of a sugar-based surfactant, metal soap, and

polyethylene wax.

The disclosure (5) relates to the processing aid according to any one of the disclosures (1) to (4), wherein, in the formula 1, X is a divalent group constituted by at least one selected from the group consisting of $X^1$ and $X^2$,

wherein $X^1$ is a group constituted by at least one selected from the group consisting of -C(=O)-, -C(=NR')-, - $S(=O)_2$-, -NR'-, -CR'R'-, and -C(OR')R'-, wherein R's at respective occurrences are each independently a hydrogen atom or a C1-C10 hydrocarbon group; and

$X^2$ is a C1-C12 aromatic hydrocarbon group optionally containing a substituent.

The disclosure (6) relates to the processing aid according to the disclosure (5), wherein, in the formula 1, X is a divalent group containing at least one selected from the group consisting of -C(=O)-, -CR'R'-, and -C(OR')R'-, wherein R's at respective occurrences are each independently a hydrogen atom or a C1-C10 hydrocarbon group.

The disclosure (7) relates to the processing aid according to any one of the disclosures (1) to (6), wherein, in the formula 1, Y and Z are each independently a group constituted by at least one selected from the group consisting of a single bond, -O-, -C(=O)-, -C(=O)O-, - C(=NR')-, -C(=NR')O-, -S-, -$S(=O)_2$-, -$S(=O)_2O$-, -NR'-, and -C(OR')R'-, wherein R's at respective occurrences are each independently a hydrogen atom or a C1-C10 hydrocarbon group.

The disclosure (8) relates to the processing aid according to the disclosure (7), wherein, in the formula 1, Y and Z are each independently a group constituted by at least one selected from the group consisting of a single bond, -O-, -C(=O)-, and -C(=O)O-.

The disclosure (9) relates to the processing aid according to any one of the disclosures (1) to (8), wherein the resin (B) has a melting point of 65°C or higher.

The disclosure (10) relates to the processing aid according to any one of the disclosures (1) to (9), wherein the resin (B) includes at least one selected from the group consisting of polylactic acid, polybutylene succinate, an ethylene-vinyl alcohol copolymer, and polybutylene succinate adipate.

The disclosure (11) relates to the processing aid according to any one of the disclosures (1) to (10), wherein the lubricant (A) includes at least one selected from the group consisting of a polysorbate, zinc stearate, magnesium 12-hydroxystearate, and polyethylene wax, and the resin (B) includes at least one selected from the group consisting of polylactic acid, polybutylene succinate, and an ethylene-vinyl alcohol copolymer.

The disclosure (12) relates to a masterbatch containing the processing aid according to any one of the disclosures (1) to (11) and a thermoplastic resin (C).

The disclosure (13) relates to the masterbatch according to the disclosure (12), wherein the thermoplastic resin (C) includes a polyolefin resin.

The disclosure (14) relates to the masterbatch according to the disclosure (12) or (13), wherein the thermoplastic resin (C) includes at least one selected from the group consisting of metallocene-catalyzed linear low-density polyethylene and Ziegler-Natta-catalyzed linear low-density polyethylene, and a mass ratio of the thermoplastic resin (C) to the processing aid (thermoplastic resin (C):processing aid) is 92:8 to 70:30.

The disclosure (15) relates to a thermoplastic resin composition containing: at least one of the processing aid according to any one of the disclosures (1) to (11) or the masterbatch according to any one of the disclosures (12) to (14); and a thermoplastic resin (D).

The disclosure (16) relates to the thermoplastic resin composition according to the disclosure (15), wherein the thermoplastic resin (D) includes a polyolefin resin.

The disclosure (17) relates to the thermoplastic resin composition according to the disclosure (15) or (16), wherein the thermoplastic resin (D) includes at least one selected from the group consisting of metallocene-catalyzed linear low-density polyethylene and Ziegler-Natta-catalyzed linear low-density polyethylene, and the processing aid is contained in an amount of 0.02 to 3% by mass.

The disclosure (18) relates to a molded article containing the thermoplastic resin composition according to any one of the disclosures (15) to (17).

The disclosure (19) relates to the molded article according to the disclosure (18), wherein the molded article is in a form of a tube, a film, or a sheet.

The disclosure (20) relates to a method for producing the processing aid according to any one of the disclosures (1) to (11), including a mixing step and an ejecting step.

The disclosure (21) relates to a method for producing the masterbatch according to any one of the disclosures (12) to (14), including a mixing step and an ejecting step.

The disclosure (22) relates to a method for producing the thermoplastic resin composition according to any one of the disclosures (15) to (17), including a mixing step and an ejecting step.

The disclosure (23) relates to a method for producing the molded article according to the disclosure (18) or (19), including a molding step.

- Advantageous Effects of Invention

The disclosure can improve the processibility of thermoplastic resins.

DESCRIPTION OF EMBODIMENTS

The disclosure will be specifically described hereinbelow.

<Processing aid>

The processing aid of the disclosure contains a lubricant (A) and a resin (B).
The resin (B) contains a structural unit represented by the following formula 1:

$$-X-(CR^1R^2)_n-Y-(CR^3R^4)_m-Z- \qquad \text{(formula 1)}$$

wherein X is a single bond or a divalent group optionally containing a functional group;

Y and Z are each independently a group constituted by at least one selected from the group consisting of a single bond, -O-, -C(=O)-, -C(=O)O-, -OC(=O)O-, -C(=NR')-, - C(=NR')O-, -OC(=NR')O-, -S-, -S(=O)-, -S(=O)O-, -OS(=O)O-, $-S(=O)_2-$, $-S(=O)_2O-$, $-OS(=O)_2O-$, -P(=O)-, -P(=O)O-, - OP(=O)O-, $-P(=O)_2-$, $-P(=O)_2O-$, $-OP(=O)_2O-$, -NR'-, and - C(OR')R'-, wherein R's at respective occurrences are each independently a hydrogen atom or a C1-C10 hydrocarbon group;
$R^1$, $R^2$, $R^3$, and $R^4$ are each independently a hydrogen atom or a C1-C10 hydrocarbon group; and
n and m are each independently an integer of 0 to 10,
with at least one of X, Y, or Z being -C(=O)-, - C(=O)O-, -OC(=O)O-, or -C(OR')R'-.

The lubricant (A) is an additive for reducing friction and improving the lubricity, and examples thereof include a wax, an alcohol, and a surfactant. One selected therefrom may be used alone, or two or more selected therefrom may be used in combination. The lubricant (A) preferably includes at least one selected from the group consisting of a wax, an alcohol, and a surfactant, more preferably at least one selected from the group consisting of a wax and a surfactant, still more preferably a surfactant.
Examples of the wax include pure hydrocarbon waxes such as liquid paraffin, natural paraffin, microwax, synthetic paraffin, polyethylene wax, and polyethylene/polypropylene wax; fatty acid waxes such as higher fatty acid and oxy fatty acid; fatty acid amide waxes such as fatty acid amide and bis fatty acid amide; and fatty acid ester waxes such as fatty acid lower alcohol esters, fatty acid polyhydric alcohol esters, e.g., glyceride, fatty acid polyglycol esters, and fatty acid fatty alcohol esters (ester waxes). Preferred among these are a pure hydrocarbon wax and a fatty acid ester wax, and more preferred is a pure hydrocarbon wax. The pure hydrocarbon wax is preferably polyethylene wax or polyethylene/polypropylene wax, more preferably polyethylene wax. The fatty acid ester wax is preferably adipic acid ester or glycerol fatty acid ester.
Examples of the polyethylene wax include a generally polymerized polyethylene wax, a metallocene-catalyzed polyethylene wax, an acid-modified polyethylene wax, an oxidized (slightly oxidized, highly oxidized) polyethylene wax, and an aromatic monomer-modified polyethylene wax. An example of the acid-modified polyethylene wax is one obtained by copolymerization with a vinyl carboxylic acid such as an acrylic acid or methacrylic acid. An example of the oxidized polyethylene wax is one obtained by air-oxidation or pyrolysis of polyethylene. An example of the aromatic monomer-modified polyethylene wax is one modified by graft polymerization with a styrene monomer.
Examples of the fatty acid ester wax include a phthalic acid ester, dimethyl or diethyl succinate and esters related thereto, glycerol monoacetate, glycerol diacetate, glycerol triacetate, glycerol monoacid ester, citric acid ester, adipic acid ester, stearic acid ester, and oleic acid ester. One of these may be used alone or two or more thereof may be used.
An example of the adipic acid ester is an adipic acid diester. Specific examples thereof include dimethyl adipate, dibutyl adipate, bis[2-(2-methoxyethoxy)ethyl]adipate, bis(butyldiglycol)adipate, bis(methyldiglycol)adipate, benzyl[2-(2-methoxyethoxy)ethyl]adipate, di-n-butyl adipate, dioctyl adipate, methyldiglycol butyldiglycol adipate, benzylmethyl glycol adipate, benzylbutyl diglycol adipate, and diisononyl phthalate. One of these may be used alone or two or more thereof may be used. Preferred among these are diisononyl phthalate and dioctyl adipate.
Examples of the glycerol fatty acid ester include glycerol monostearate, glycerol monobehenate, glycerol mono(12-hydroxystearate), glycerol monooleate, glycerol monocaprylate, glycerol monocaprate, glycerol monolaurate, glycerol diacetomonolaurate, succinic acid fatty acid monoglyceride, citric acid fatty acid monoglyceride, diacetyltartaric acid fatty acid monoglyceride, diglycerol laurate, diglycerol stearate, diglycerol oleate, diglycerol monolaurate, diglycerol monomyristate, diglycerol monostearate, diglycerol monooleate, tetraglycerol stearate, decaglycerol laurate, decaglycerol stearate, decaglycerol oleate, polyglycerol polyricinoleate, propylene glycol monolaurate, propylene glycol monopalmitate, propylene glycol monostearate, propylene glycol monooleate, and propylene glycol monobehenate. One of these may be used alone or two or more thereof may be used. Preferred among these are glycerol

diacetomonolaurate and decaglycerol stearate.

The acid value of the wax is preferably 40 mgKOH/g or lower, more preferably 30 mgKOH/g or lower, still more preferably 20 mgKOH/g or lower. The lower limit may be, but is not limited to, 0 mgKOH/g. The wax having an acid value within this range can lead to a better effect of improving the processibility.
The acid value is the number of milligrams of potassium hydroxide required to neutralize the free acid in 1 g of the wax. The acid value of the wax can be determined by typical neutralization titration (JIS K 0070:1992).
The wax has a melting point of preferably 40°C or higher, more preferably 60°C or higher, still more preferably 80°C or higher, while preferably 200°C or lower, more preferably 160°C or lower, still more preferably 130°C or lower. The wax having a melting point within this range can lead to a better effect of improving the processibility.
The melting point herein is the temperature corresponding to the maximum value on a heat-of-fusion curve at a temperature-increasing rate of 10°C/min using a differential scanning calorimeter (DSC).
The wax has a melt viscosity at 140°C of preferably 20 mPa·s or higher, more preferably 40 mPa·s or higher, still more preferably 60 mPa·s or higher, while preferably 500 mPa·s or lower, more preferably 400 mPa·s or lower, more preferably 350 mPa·s or lower. The wax having a melt viscosity at 140°C within this range can lead to a better effect of improving the processibility.
The melt viscosity is a value determined by heating a 2-g sample at 140°C for five minutes in advance and then keeping the sample at this temperature under a load of 0.7 MPa using a flow tester (available from Shimadzu Corp.) and a 2φ-8 L die in conformity with ISO 11443.
Examples of the alcohol include fatty alcohols such as higher alcohol and polyhydric alcohols such as polyglycol and polyglycerol. One of these may be used alone or two or more thereof may be used.
Examples of the fatty alcohols include lauryl alcohol, myristyl alcohol, cetyl alcohol, stearyl alcohol, oleyl alcohol, and behenyl alcohol. One of these may be used alone or two or more thereof may be used.
Examples of the surfactant include anionic surfactants such as metal soap and an ammonium salt surfactant; cationic surfactants such as an alkyl amine salt and a quaternary ammonium salt; nonionic surfactants such as ester-based, ether-based, ester/ether-based, and amide-based surfactants; and amphoteric surfactants such as an aminocarboxylic acid salt, an alkyl betaine, and an alkyl imidazoline derivative. Preferred among these is an anionic surfactant or a nonionic surfactant. The anionic surfactant is preferably metal soap, specifically preferably a carboxylic acid salt, a sulfuric acid salt, a sulfonic acid salt, or a phosphoric acid ester salt. The nonionic surfactant is preferably an ester/ether-based surfactant, specifically preferably a sugar-based surfactant.
Examples of the metal soap include a fatty acid salt, polysulfonic acid salt, polycarboxylic acid salt, alkyl sulfate salt, alkylaryl sulfonate salt, alkyl naphthalenesulfonate salt, dialkyl sulfonate salt, dialkyl sulfosuccinate salt, alkyl phosphate salt, polyoxyethylene alkyl ether sulfate, polyoxyethylene alkylaryl ether sulfate, and polyoxyethylene alkyl phosphate sulfonate salt, and specific examples thereof include sodium dodecylbenzenesulfonate, sodium laurylsulfate, sodium polyoxyethylene lauryl ether sulfate, and a polyoxyethylene nonylphenyl ether sulfate salt. One of these may be used alone or two or more thereof may be used.
The metal soap may be preferably, for example, a compound represented by the following formula (1):

$$(R^5COO)_{n1}M^1 \qquad (1)$$

wherein $R^5$ is a hydrogen atom or a C1-C21 alkyl group; n1 is an integer of 1 to 4; and $M^1$ is lithium, sodium, potassium, rubidium, caesium, boron, magnesium, aluminum, calcium, manganese, iron, cobalt, nickel, tin, antimony, copper, silver, zinc, molybdenum, vanadium, strontium, zirconium, barium, bismuth, lead, gold, platinum, or any rare-earth element.
In the case where n1 is an integer of 2 or greater in the formula (1), multiple $R^5$s may be the same as or different from each other.
The C1-C21 alkyl group for $R^5$ may be a linear alkyl group, or may be a branched alkyl group, or may contain an alicyclic structure.
The C1-C21 alkyl group for $R^5$ corresponds to a carboxylic acid residue resulting from removing the carboxyl group (COOH) from a C1-C22 carboxylic acid represented by $R^5COOH$ used for production of a fatty acid metal salt. Examples of the carboxylic acid residue include an acetic acid residue, propionic acid residue, butanoic acid residue, pentanoic acid residue, acrylic acid residue, methacrylic acid residue, octylic acid residue (2-ethylhexanoic acid residue), neodecanoic acid residue, naphthenic acid residue, isononanoic acid residue, eleostearic acid residue, tall oil fatty acid residue, coconut oil fatty acid residue, soybean oil fatty acid residue, linseed oil fatty acid residue, safflower oil fatty acid residue, dehydrated castor oil fatty acid residue, tung oil fatty acid residue, lauric acid residue, myristic acid residue,

palmitic acid residue, stearic acid residue, isostearic acid residue, oleic acid residue, and 12-hydroxystearic acid residue.

To improve the processibility, the C1-C21 alkyl group for $R^5$ is preferably a C12-C21 alkyl group, more preferably a C16-C21 alkyl group, still more preferably a stearic acid residue or 12-hydroxystearic acid residue.

$M^1$ is lithium, sodium, potassium, rubidium, caesium, boron, magnesium, aluminum, calcium, manganese, iron, cobalt, nickel, tin, antimony, copper, silver, zinc, molybdenum, vanadium, strontium, zirconium, barium, bismuth, lead, gold, or platinum.

In the formula (1), n1 is a value determined in accordance with the ionic valence of the metal atom $M^1$; for example, when $M^1$ is boron, n1 is 3; and when $M^1$ is cobalt, n1 is 2.

The metal soap encompasses the form of a fatty acid boric acid metal salt. The fatty acid boric acid metal salt may be, for example, a compound represented by the following formula (2):

$$(R^6COO\text{-}M^2\text{-}O)_3B \qquad (2)$$

wherein $R^6$ is a hydrogen atom or a C1-C21 alkyl group; $M^2$ is boron, magnesium, aluminum, calcium, manganese, iron, cobalt, nickel, tin, antimony, copper, zinc, molybdenum, vanadium, strontium, zirconium, barium, bismuth, lead, gold, or platinum.

In the formula (2), the C1-C21 alkyl group for $R^6$ is defined as described for the C1-C21 alkyl group for $R^5$ in the formula (1). Similarly, the metal for $M^2$ in the formula (2) is defined as described for the metal for $M^1$ in the formula (1).

One metal soap may be used alone, or two or more metal soaps having different structures may be used.

Specific examples of the metal soap include metal salts of stearic acid and metal salts of hydroxystearic acid. The metal soap preferably includes at least one selected from the group consisting of a metal salt of stearic acid and a metal salt of hydroxystearic acid, more preferably at least one selected from the group consisting of zinc stearate, magnesium hydroxystearate, and calcium stearate.

Examples of the metal constituting the metal salt include zinc, magnesium, and calcium, and the metal preferably includes at least one selected from the group consisting of zinc, magnesium, and calcium, more preferably at least one selected from the group consisting of zinc and magnesium. The metal soap can be produced by a known method, and may be a commercially available product.

An example of the ammonium salt anionic surfactant is a fatty acid ammonium salt. Examples thereof include ammonium laurylsulfate and ammonium polyoxyethylene lauryl ether sulfate. One anionic surfactant may be used, or two or more anionic surfactants may be used.

Examples of the cationic surfactant include alkylamine salts and quaternary ammonium salts. Specific examples thereof include stearylamine acetate, trimethylcocoammonium chloride, tallow trimethylammonium chloride, dimethyldioleylammonium chloride, methyloleyl diethanol chloride, tetramethylammonium chloride, laurylpyridinium chloride, laurylpyridinium bromide, laurylpyridinium disulfate, cetyltrimethylammonium chloride, cetylpyridinium bromide, 4-alkyl mercaptopyridine, poly(vinylpyridine)-dodecyl bromide, and (dodecylbenzyl)triethylammonium chloride. One cationic surfactant may be used, or two or more cationic surfactants may be used.

Examples of the amphoteric surfactant include an aminocarboxylic acid salt, an alkyl betaine surfactant, and an alkyl imidazoline derivative, and a specific example thereof is lauric acid amidopropylbetaine. One amphoteric surfactant may be used, or two or more amphoteric surfactants may be used.

Examples of the ether-based nonionic surfactant include a polyoxyethylene alkyl ether, a polyoxyalkylene derivative, a polyoxyethylene phenyl ether, and an alkyl allyl ether. Specific examples thereof include polyoxyethylene lauryl ether, polyoxyethylene oleyl ether, and polyoxyethylene octylphenyl ether.

An example of the ester/ether-based nonionic surfactant is a sugar-based surfactant. Specific examples thereof include a sorbitan fatty acid ester, sorbitol, and a polyoxyethylene sorbitan fatty acid ester.

One nonionic surfactant may be used, or two or more nonionic surfactants may be used.

Examples of the sugar-based surfactant include a sucrose fatty acid ester, a sorbitan acid ester, and a polysorbate.

Specific examples of the sugar-based surfactant include sorbitol fatty acid esters such as sorbitol monolaurate, sorbitol monostearate, sorbitol monooleate, sorbitol trioleate, sorbitol tristearate, and sorbitol monoisostearate; sorbitan fatty acid esters such as sorbitan isostearate, sorbitan oleate, sorbitan caprylate, sorbitan dioleate, sorbitan distearate, sorbitan stearate, sorbitan sesquiisostearate, sorbitan sesquioleate, sorbitan sesquicaprylate, sorbitan sesquistearate, sorbitan triisostearate, sorbitan trioleate, sorbitan tristearate, sorbitan palmitate, sorbitan coconut fatty acid ester, sorbitan laurate, and sorbitan olive fatty acid ester; sucrose fatty acid esters such as sucrose acetate isobutylate, sucrose octaacetate, sucrose oleate, sucrose distearate, sucrose dilaurate, sucrose stearate, sucrose tetraisostearate, sucrose tetrahydroxystearate, sucrose tristearate, sucrose tribehenate, sucrose trilaurate, sucrose tetrastearate triacetate, sucrose palmitate, sucrose hexaerucate, sucrose hexapalmitate, sucrose pentaerucate, sucrose pentahydroxystearate, sucrose polyoleate, sucrose polystearate, sucrose polysoyate, sucrose polypalmate, sucrose polybehenate, sucrose polylaurate, sucrose polylinoleaate, sucrose polycottonseedate, sucrose myristate, sucrose cocoate, sucrose laurate,

sucrose ricinoleate, sucrose benzoate, sucrose distearate acetate, and sucrose stearate acetate; and alkyl glucosides such as coconut fatty acid glucoside, lauryl glucoside, decyl glucoside, myristyl glucoside, palmityl glucoside, stearyl glucoside, and cocoglucoside. Each of these may be used alone or two or more of these may be used in combination.

The sugar-based surfactant is preferably a sorbitan ester containing a polar sorbitan group (hydrophilic group) and a nonpolar carboxylic acid (lipophilic group) bonded thereto via an ester bond. Also preferred are polyoxyethylene derivatives of sorbitan esters and a plurality of polyoxyethylene oligomers which are chemical substituents on a sorbitan group.

These polyoxyethylene derivatives of sorbitan esters are referred to as polysorbates.

Specifically, a polyoxyethylene derivative of a sorbitan ester (also referred to as a polysorbate) may be represented by the following formula (I):

[Chem. 1]

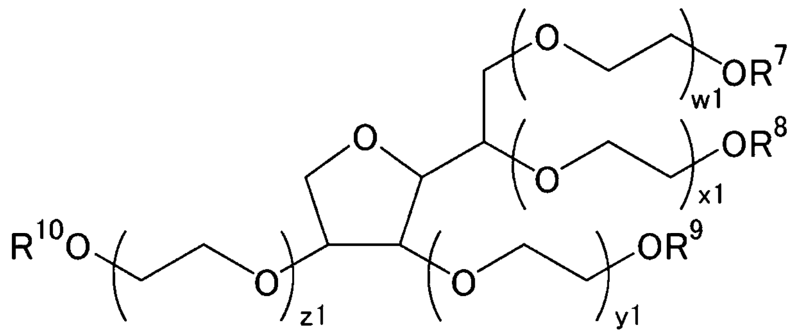

wherein one of $R^7$ to $R^{10}$ is a linear fatty acid portion while the other three of $R^7$ to $R^{10}$ are each hydrogen;

w1, x1, y1, and z1 are integers satisfying 10 < w1 + x1 + y1 + z1 < 40, preferably 15 < w1 + x1 + y1 + z1 < 25, more preferably w1 + x1 + y1 + z1 = 20;

the linear fatty acid portion is preferably represented by $(C{=}O)(CH_2),CH_3$, and

the fatty acid portion may instead contain a double bond along a hydrocarbon chain (i.e., optionally contains a monovalent unsaturated portion) so as to be represented by the formula $(C{=}O)(CH_2)_b(CH){=}(CH)(CH_2)_cCH_3$, where a is an integer of 10 to 25, preferably an integer of 12 to 18, and the linear fatty acid may contain an unsaturated bond;

b + c is an integer of 8 to 23, preferably an integer of 10 to 18; and

the number of unsaturated bonds may be such that the hydrocarbon chain contains two or more unsaturated portions, and this number of unsaturated portions is preferably four or less, more preferably three or less, and is particularly preferably maintained at 0, 1, or 2.

Specific examples of the polysorbate include polysorbate 20 (polyoxyethylene (20) sorbitan monolaurate), polysorbate 40 (polyoxyethylene (20) sorbitan monopalmitate), polysorbate 60 (polyoxyethylene (20) sorbitan monostearate), and polysorbate 80 (polyoxyethylene (20) sorbitan monooleate).

The figures 20, 40, 60, and 80 following the "polysorbate" each mean the fatty acid portion ("lipophilic group" in the molecule) added to the polyoxyethylene sorbitan portion ("hydrophilic group" in the molecule); 20 refers to monolaurate; 40 refers to monopalmitate; 60 refers to monostearate; and 80 refers to monooleate (examples of monovalent unsaturated fatty acid portions).

The name "polysorbate #" means that 20 oxyethylene portions ($-(CH_2CH_2O)-$) are added to the solvate.

In a specific embodiment, the sugar-based surfactant may be or may include one or more of polysorbate 20, polysorbate 40, polysorbate 60, and/or polysorbate 80. For example, the surfactant may be polysorbate 60 or may include a different polysorbate.

Instead of the aforementioned polysorbates, a surfactant used may be a variation of any aforementioned specific polysorbate.

For example, with reference to the formula (I), two, three, or all of $R^7$ to $R^{10}$ each may be a linear fatty acid portion (and the other(s) of $R^7$ to $R^{10}$, when present, is hydrogen).

Examples of this compound include polyoxyethylene sorbitan tristearate in which three of $R^7$ to $R^{10}$ are each a fatty acid portion, stearic acid, while the other of $R^7$ to $R^{10}$ is hydrogen.

The lubricant (A) has a melt flow rate (MFR) of preferably 100 g/10 min or higher, more preferably 500 g/10 min or higher. The upper limit thereof is normally, but is not limited to, 100000 g/10 min. The lubricant (A) having a MFR within this range can lead to a better effect of improving the processibility.

The MFR herein is determined under conditions of 190°C and a 2.16 kgf load in conformity with ASTM D1238.

The amount of the lubricant (A) in the processing aid of the disclosure is preferably 1% by mass or more, more preferably 2% by mass or more, still more preferably 4% by mass or more, while preferably 98% by mass or less, more preferably 70% by mass or less, still more preferably 40% by mass or less, most preferably 10% by mass or less.

The resin (B) contains a structural unit represented by the following formula 1. The lubricant (A) preferably does not contain this structural unit.

$$-X-(CR^1R^2)_n-Y-(CR^3R^4)_m-Z- \quad \text{(formula 1)}$$

In the formula 1, X is a single bond or a divalent group optionally containing a functional group;

Y and Z are each independently a group constituted by at least one selected from the group consisting of a single bond, -O-, -C(=O)-, -C(=O)O-, -OC(=O)O-, -C(=NR')-, - C(=NR')O-, -OC(=NR')O-, -S-, -S(=O)-, -S(=O)O-, -OS(=O)O-, $-S(=O)_2-$, $-S(=O)_2O-$, $-OS(=O)_2O-$, -P(=O)-, -P(=O)O-, - OP(=O)O-, $-P(=O)_2-$, $-P(=O)_2O-$, $-OP(=O)_2O-$, -NR'-, and - C(OR')R'-, wherein R's at respective occurrences are each independently a hydrogen atom or a C1-C10 hydrocarbon group;

$R^1$, $R^2$, $R^3$, and $R^4$ are each independently a hydrogen atom or a C1-C10 hydrocarbon group; and

n and m are each independently an integer of 0 to 10,

with at least one of X, Y, or Z being -C(=O)-, - C(=O)O-, -OC(=O)O-, or -C(OR')R'-.

In the formula 1, preferably, X is a divalent group constituted by at least one selected from the group consisting of $X^1$ and $X^2$,

wherein $X^1$ is a group constituted by at least one selected from the group consisting of -C(=O)-, -C(=NR')-, $-S(=O)_2-$, -NR'-, -CR'R'-, and -C(OR')R'-, wherein R's at respective occurrences are each independently a hydrogen atom or a C1-C10 hydrocarbon group; and

$X^2$ is a C1-C12 aromatic hydrocarbon group optionally containing a substituent.

In the formula 1, X is more preferably a divalent group containing at least one selected from the group consisting of -C(=O)-, -CR'R'-, and -C(OR')R'-, wherein R's at respective occurrences are each independently a hydrogen atom or a C1-C10 hydrocarbon group.

In the formula 1, R's at respective occurrences are preferably each independently a hydrogen atom or a C1-C7 hydrocarbon group, more preferably a hydrogen atom or a C1-C4 hydrocarbon group, still more preferably a hydrogen atom or a C1 hydrocarbon group.

In the formula 1, Y and Z are preferably each independently a group constituted by at least one selected from the group consisting of a single bond, -O-, -C(=O)-, - C(=O)O-, -C(=NR')-, -C(=NR')O-, -S-, $-S(=O)_2-$, $-S(=O)_2O-$, - NR'-, and -C(OR')R'-, wherein R's at respective occurrences are each independently a hydrogen atom or a C1-C10 hydrocarbon group.

In the formula 1, Y and Z are preferably each independently a group constituted by at least one selected from the group consisting of a single bond, -O-, -C(=O)-, and -C(=O)O-.

In the formula 1, $R^1$, $R^2$, $R^3$, and $R^4$ are preferably each independently a hydrogen atom or a C1-C7 hydrocarbon group, more preferably a hydrogen atom or a C1-C4 hydrocarbon group, still more preferably a hydrogen atom or a C1 hydrocarbon group.

In the formula 1, n and m are preferably each independently an integer of 0 to 8, more preferably an integer of 0 to 6, still more preferably an integer of 0 to 4, particularly preferably an integer of 0 to 2.

Examples of the resin (B) include polylactic acid (PLA), polybutylene succinate (PBS), an ethylene-vinyl alcohol copolymer (EVOH), and polybutylene succinate adipate (PBSA). The resin (B) preferably includes at least one selected from the group consisting of PLA, PBS, EVOH, and PBSA, more preferably at least one selected from the group consisting of PLA, PBS, and EVOH, still more preferably at least one selected from the group consisting of PLA and EVOH.

The resin (B) may contain a structural unit other than the structural unit represented by the formula 1. Examples of the structural unit other than the structural unit represented by the formula 1 include structural units derived from: glycol compounds such as ethylene glycol, propylene glycol, butanediol, heptanediol, hexanediol, octanediol, nonanediol, decanediol, 1,4-cyclohexanedimethanol, neopentyl glycol, glycerol, pentaerythritol, bisphenol A, polyethylene glycol, polypropylene glycol, and polytetramethylene glycol; dicarboxylic acids such as oxalic acid, adipic acid, sebacic acid, azelaic acid, dodecanedioic acid, malonic acid, glutaric acid, cyclohexanedicarboxylic acid, terephthalic acid, isophthalic acid, phthalic acid, naphthalenedicarboxylic acid, bis(p-carboxyphenyl)methane, anthracenedicarboxylic acid, 4,4'-diphenyl ether dicarboxylic acid, sodium 5-sulfoisophthalate, and tetrabutylphosphonium 5-isophthalate; hydroxycarboxylic acids such as glycolic acid, hydroxypropionic acid, hydroxybutyric acid, hydroxyvaleric acid, hydroxycaproic acid, and hydroxybenzoic acid; and lactones such as caprolactone, valerolactone, propiolactone, undecalactone, and 1,5-oxepan-2-one.

The amount of the structural unit represented by the formula 1 in the resin (B) is preferably 0.1% by mass or more, more preferably 1% by mass or more, still more preferably 10% by mass or more, particularly preferably 20% by mass or more. The amount is preferably 99.9% by mass or less, more preferably 99% by mass or less, still more preferably 95% by mass or less.

The ethylene-vinyl alcohol copolymer has an ethylene content of preferably 10 mol% or more, more preferably 20 mol% or more, still more preferably 30 mol% or more, while preferably 60 mol% or less, more preferably 50 mol% or less, still more preferably 40 mol% or less. The ethylene-vinyl alcohol copolymer having an ethylene content within this range can lead to a better effect of improving the processibility.

The ethylene content herein is determined by nuclear magnetic resonance (NMR) analysis.

The ethylene-vinyl alcohol copolymer is preferably one obtained by saponifying an ethylene-vinyl ester copolymer, and is particularly preferably one obtained by saponifying an ethylene-vinyl acetate copolymer.

The ethylene-vinyl alcohol copolymer has a degree of saponification of preferably 80 to 100 mol%.

Copolymerization of ethylene and vinyl acetate may involve use of a different fatty acid vinyl ester (e.g., vinyl propionate or vinyl pivalate). The ethylene-vinyl alcohol copolymer may contain 0.0002 to 0.2 mol% of a vinylsilane compound as a copolymerized component. Examples of the vinylsilane compound include vinyltrimethoxysilane, vinyltriethoxysilane, vinyltri($\beta$-methoxy-ethoxy)silane, and $\gamma$-methacryloxypropylmethoxysilane. Preferably used among these are vinyltrimethoxysilane and vinyltriethoxysilane.

Copolymerization of ethylene and vinyl acetate may involve the presence of a small amount of a monomer different from the aforementioned fatty acid vinyl ester or vinylsilane compound, such as any of $\alpha$-olefins such as propylene, isobutylene, $\alpha$-octene, and $\alpha$-dodecene; unsaturated acids such as acrylic acid, methacrylic acid, crotonic acid, maleic acid, and itaconic acid, and anhydrides, salts, and mono- or dialkyl esters thereof; nitriles such as acrylonitrile and methacrylonitrile; amides such as acrylamide and methacrylamide; olefin sulfonic acids such as ethylene sulfonic acid, allyl sulfonic acid, and methallyl sulfonic acid and salts thereof; alkyl vinyl ethers, vinyl ketones, N-vinylpyrrolidone, vinyl chloride, and vinylidene chloride.

The melting point of the resin (B) is preferably 65°C or higher, more preferably 70°C or higher, still more preferably 75°C or higher, further preferably 80°C or higher, while preferably 190°C or lower, more preferably 185°C or lower, still more preferably 180°C or lower. The resin (B) having a melting point within this range can lead to a better effect of improving the processibility.

The melting point herein is the temperature corresponding to the maximum value on a heat-of-fusion curve at a temperature-increasing rate of 10°C/min using a differential scanning calorimeter (DSC).

The resin (B) has a melt flow rate (MFR) of preferably 0.001 g/10 min or higher, more preferably 0.01 g/10 min or higher, still more preferably 0.05 g/10 min or higher, further preferably 0.1 g/10 min or higher, particularly preferably 0.5 g/10 min or higher, while preferably 500 g/10 min or lower, more preferably 300 g/10 min or lower, still more preferably 150 g/10 min or lower, further preferably 40 g/10 min or lower, further preferably 20 g/10 min or lower, particularly preferably 10 g/10 min or lower. The resin (B) having a MFR within this range can lead to a better effect of improving the processibility.

The MFR herein is determined under conditions of 190°C and a 2.16 kgf load in conformity with ASTM D1238.

From the viewpoint of improved processibility, the weight average molecular weight of the resin (B) is preferably 80000 or more, more preferably 100000 or more. From the same viewpoint, the weight average molecular weight of the resin (B) is preferably 400000 or less, more preferably 350000 or less. The weight average molecular weight of the resin (B) can be determined by gel permeation chromatography (GPC). The analysis is performed using chloroform as a solvent with a high-temperature SEC column (GMHHR-H series) available from Tosoh Corporation at a flow rate of 1.0 mL/min and a column temperature of 40°C. A differential refractive index detector (RI) is used as a detector, with polystyrene of known molecular weight as a reference.

The amount of the resin (B) in the processing aid of the disclosure is preferably 1% by mass or more, more preferably 30% by mass or more, still more preferably 60% by mass or more, while preferably 99% by mass or less, more preferably 98% by mass or less, still more preferably 96% by mass or less.

The processing aid of the disclosure may contain a component different from the lubricant (A) and the resin (B). Examples of the different component include a different additive (E). Examples of the different additive (E) include a synergist including at least one selected from the group consisting of a polyol having a melting point of 80°C or lower, polycaprolactone, silicone, and a polyamide-polyether block copolymer.

The melting point of the polyol is at least 80°C or lower, preferably 75°C or lower, more preferably 70°C or lower, still more preferably 68°C or lower, while preferably 10°C or higher, more preferably 20°C or higher, still more preferably 25°C or higher. The polyol having a melting point within this range can lead to a better effect of improving the processibility.

The polyol can be represented by $A[(OR^{11})_{x2}OR^{12}]_{y2}$, wherein A is commonly alkylene having one or more ether bonds; y2 is 2 or 3, $(OR^{11})_{x2}$ is a poly (oxyalkylene) chain having multiple (x2) oxyalkylene groups $OR^{11}$; $R^{11}$s are each independently C2-C5 alkylene or, in some embodiments, C2-C3 alkylene; $R^{12}$ is hydrogen, alkyl, aryl, arylalkenyl, alkylarylenyl, -C(O)-alkyl, -C(O)-aryl, -C(O)-arylalkenyl, or -C(O)-alkylarylenyl, where -C(O)- bonds to O of $OR^{12}$; and x2 is 10 to 230000.

The polyol may be, for example, a homopolymer such as poly (oxyethylene) in which $R^{11}$ is $-CH_2CH_2-$ or poly (oxypropylene) in which $R^{11}$ is $-C_3H_6-$.

The polyol may be a chain of randomly distributed oxyalkylene groups (e.g., $-OC_2H_4-$ and $-OC_3H_6-$ units which are copolymers) or a chain including alternating blocks of repeated oxyalkylene groups (e.g., a polymer including a $(-OC_2H_4-)_{a1}$ block and a $(-OC_3H_6-)_{b1}$ block, where a1 + b1 is 10 to 230000).

In some embodiments, A in the polyol is ethylene, $-CH_2-CH(-)-CH_2-$ (derived from glycerol), $CH_3CH_2C(CH_2-)_3$ (derived from 1,1,1-trimethylolpropane), poly(oxypropylene), $-CH_2CH_2-O-CH_2CH_2-$, or $-CH_2CH_2-O-CH_2CH_2-O-CH_2CH_2-$; and $R^{12}$ is hydrogen, methyl, butyl, phenyl, benzyl, acetyl, benzoyl, or stearyl.

The polyol may be polyester prepared from a dicarboxylic acid and a poly(oxyalkylene) polymer represented by A $[(OR^{11})_{x2}OR^{12}]_{y2}$, wherein A, $R^{11}$, and x2 are as defined above; $R^{12}$ is hydrogen; and y2 is 2.

One of the polyols may be used alone or two or more thereof may be used in combination. To achieve an excellent effect of improving the processibility, polyethylene glycol or polyethylene oxide is preferred, and polyethylene glycol is particularly preferred.

The polyethylene glycol has a number average molecular weight (Mn) of preferably 1000 or higher, more preferably 3000 or higher, still more preferably 5000 or higher, while preferably 50000 or lower, more preferably 45000 or lower, still more preferably 40000 or lower. The polyethylene glycol having a number average molecular weight within this range can lead to a better effect of improving the processibility.

The number average molecular weight herein is determined by calculation from the hydroxyl value determined in conformity with JIS K0070.

The polyethylene oxide has a viscosity average molecular weight (Mv) of preferably 100000 or higher, more preferably 120000 or higher, still more preferably 140000 or higher, while preferably 10000000 or lower, more preferably 1600000 or lower, still more preferably 500000 or lower. The polyethylene oxide having a viscosity average molecular weight within this range can lead to a better effect of improving the processibility.

The viscosity average molecular weight herein is calculated as follows.

An Ostwald viscometer is used to determine at 35°C the specific viscosities ηsp of aqueous solutions containing a polymer at various concentrations c (g/dl) in pure water; each specific viscosity is divided by the corresponding polymer concentration to provide the reduced viscosity; based on the relationship between the resulting reduced viscosity (ηsp/c) and the polymer concentration c, with the polymer concentration c being extrapolated to 0, the [η] value is calculated. The [η] value is substituted into the following formula, whereby the viscosity average molecular weight M is calculated.

$$\text{Formula: } [\eta] = 6.4 \times 10^{-5} M^{0.82}$$

The polycaprolactone may be a homopolymer of ε-caprolactone or may be a modified polycaprolactone. Examples of the modified polycaprolactone include those modified with, for example, 1,4-butanediol combined during ring-opening polymerization of ε-caprolactone and those modified with, for example, an ether or ester group at an end of a polymer.

The polycaprolactone has a weight average molecular weight (Mw) of preferably 2000 or higher, more preferably 10000 or higher, still more preferably 25000 or higher, while preferably 100000 or lower, more preferably 95000 or lower, still more preferably 90000 or lower. The polycaprolactone having a weight average molecular weight within this range can lead to a better effect of improving the processibility.

The weight average molecular weight herein is determined in polystyrene equivalent by gel permeation chromatography (GPC).

The polycaprolactone has a melting point of preferably 80°C or lower, more preferably 75°C or lower, still more preferably 70°C or lower, further preferably 68°C or lower, while preferably 10°C or higher, more preferably 20°C or higher, still more preferably 45°C or higher. The polycaprolactone copolymer having a melting point within this range can lead to a better effect of improving the processibility.

The silicone may be basically any organic silicon compound known to those skilled in the art with the term silicone polymer. An appropriate definition of the silicone is found in Winnacker/Kuchler: "Chemische Technik" [Chemical Technology], R. Dittmeyer, W. Keim, G. Kreysa, A. Oberholz (editor), Vol. 5: "Organische Zwischenverbindungen, Polymere" [Organic Intermediates, Polymers], Chapter: "Silicones", Wiley-VCH, Weinheim, 2005.

The silicone may be a substituted or unsubstituted linear oligo- or polydiorganosiloxane, a branched silicone polymer, silicone resin, or a crosslinked silicone polymer. A mixture of various silicone polymers may also be used, of course. As described above, a silicone-containing copolymer may be used, such as a polyether functional silicone, a silicone containing a urea or urethane unit, or a silicone block copolymer with an organic polymer. To achieve better additivity, particularly preferred is to use a high molecular weight polydiorganosiloxane that can contain a non-silicone component, such as filler, e.g., fine silicic acid particulate, chalk, talc, or a sheet-shaped silicic acid salt.

Preferably, the silicone polymer corresponds to the formula A $[R^{13}{}_3SiO_{1/2}]_{a2}[SiR^{13}{}_2O_{2/2}]_{b2}[R^{13}SiO_{3/2}]_{c2}[SiO_{4/2}]_{d2}$, wherein $R^{13}$ is hydrogen, -OH, or a C1-C18 substituted or unsubstituted hydrocarbon residue; and a2, b2,

c2, and d2 each mean 0 or an integer, with a2 + b2 + c2 + d2 being an integer of 5 to 15000.

Examples of the C1-C18 hydrocarbon residue $R^{13}$ include alkyl residues, such as methyl, ethyl, n-propyl, isopropyl, n-butyl, 2-butyl, isobutyl, tert-butyl, n-pentyl, isopentyl, neopentyl, a tert-pentyl residue, hexyl residues, e.g., a n-hexyl residue, heptyl residues, e.g., a n-heptyl residue, octyl residues, e.g., a n-octyl residue and an isooctyl residue, a 2,2,4-trimethylpentyl residue, nonyl residues, e.g., a n-nonyl residue, decyl residues, e.g., a n-decyl residue, cycloalkyl residues, e.g., a cyclopentyl residue, a cyclohexyl residue, a 4-ethylcyclohexyl residue, and a cycloheptyl residue, a norbornyl residue, and a methylcyclohexyl residue. Preferred among the alkyl residues are C1-C6 residues, such as methyl and ethyl residues, particularly a methyl residue.

Examples of $R^{13}$ also include C1-C18 unsaturated hydrocarbon residues such as alkenyl residues, e.g., a vinyl residue, a 2-propen-2-yl residue, an allyl residue, a 3-buten-1-yl residue, a 5-hexen-1-yl residue, and a 10-undecen-1-yl residue, as well as cycloalkenyl residues (a 2-cyclohexenyl residue, a 3-cyclohexenyl residue, a cyclopentadienyl residue, and a 2-(cyclohex-3-en-1-yl)ethyl residue); aryl residues, e.g., a phenyl residue, a biphenylyl residue, and a naphthyl residue; alkaryl residues, e.g., o-, m-, or p-tolyl residue and phenethyl residues (a 2-phenylethyl residue and a 1-phenylethyl residue); as well as aralkyl residues, e.g., a benzyl residue. Preferred C1-C18 unsaturated hydrocarbon residues $R^{13}$ are a vinyl residue and a phenyl residue.

Examples of a substituted hydrocarbon residue as the residue $R^{13}$ include halogenated hydrocarbons such as a chloromethyl residue, a 3-chloropropyl residue, a 3-bromopropyl residue, a 3,3,3-trifluoropropyl residue, and a 5,5,5,4,4,3,3-heptafluoropentyl residue, as well as a chlorophenyl residue, a dichlorophenyl residue, and a trifluorotolyl residue.

The residue $R^{13}$ is preferably coupled with a silicone polymer represented by the formula A via a Si-C bond, and may be coupled with the silicone polymer via an oxygen atom -O-.

$R^{13}$ preferably contains 1 to 6 carbon atoms. Particularly preferred are an ethyl residue, a phenyl residue, a vinyl residue, and a methyl residue.

Preferably, the number represented by a2 + b2 + c2 + d2 means at least 10, more preferably at least 100, particularly preferably at least 1000 and at most 15000, still more preferably at most 10000, particularly preferably at most 7000.

Preferably, the number represented by c2 + d2 means < 0.1 × (a2 + b2 + c2 + d2), particularly c2 + d2 < 0.05 × (a2 + b2 + c2 + d2).

Preferably at least 50%, more preferably at least 70%, particularly preferably at least 80% of all residues $R^{13}$ mean a methyl residue.

In principle, every silicone polymer corresponding to the formula A may be used. Still, preferred is a silicone polymer having a dynamic viscosity of higher than 1000 mPa·s, which is measured using a plate-cone system (cone CP50-2) having an opening angle of 2° and a diameter of 50 mm with a rheometer "MCR 302" available from Anton Paar at a measurement temperature of 25.00°C ± 0.05°C and a shear rate of 1 sec-1, preferably in conformity with DIN EN ISO3219:1994 and DIN 53019.

Among these silicones, a silicone polymer having a very high molecular weight may be used, such as UHMW polysiloxane (ultra-high molecular weight; described in K. J. Ryan, et al., Journal of Vinyl & Additive Technology, March 2000, Vol. 6, No. 1, pp. 7-19).

UHMW polysiloxane has a degree of polymerization within a range from > 1000 to about 14000, which corresponds to a number average molecular weight from 74 kg/mol to 1000 kg/mol.

Typical UHMW polysiloxane has a dynamic viscosity from 10 kPa·s to 50 kPa·s, preferably from 15 kPa·s to 30 kPa·s, which is determined using an airborne rotational rheometer preferably in conformity with DIN EN ISO3219:1994 and DIN 53019, where a plate-plate system (diameter 25 mm) having a measurement gap of 0.5 mm is used. The measurement temperature is 25.00°C +/- 0.1°C. The shear rate gradient is 0.1 $sec^{-1}$· The viscosity described refers to an arithmetic mean of three distinct, independently measured values.

Owing to its inexpensiveness and effectiveness, particularly preferred among the UHMW polysiloxanes is a high molecular weight polydimethylsiloxane having a dynamic viscosity from 1 kPa·s to 50 kPa·s, preferably from 10 to 40 kPa·s, particularly preferably from 15 to 30 kPa·s (preferably determined by the aforementioned method).

Examples of the UHMW polysiloxane include commercially available UHMW polysiloxanes such as MULTIBASE® MB50-001 and MULTIBASE® MB50-002 available from Dupont, GENIOPLAST® PELLET S, GENIOPLAST® PELLET P PlUS, GENIOPLAST® PE50S08, and GENIOPLAST® PP50S12 available from Wacker Asahikasei Silicone Co., Ltd., and mixtures of any of these, with MB50-002 and GENIOPLAST® PELLET S being preferred.

The silicone polymer can be commercially available in the form of pellets or granules or masterbatch for ready-to-use, which may be mixed with thermoplastic granules before additional processing.

The polyamide-polyether block copolymer is a copolymer including a polyamide block and a polyether block in the polymer backbone. In the disclosure, such a block copolymer including a polyamide block and a polyether block can also be referred to as a "polyamide/polyether block copolymer". This may also be abbreviated to "PEBA copolymer" or "PEBA".

In some embodiments of the disclosure, the PEBA copolymer can be represented by the following formula:

[Chem. 2]

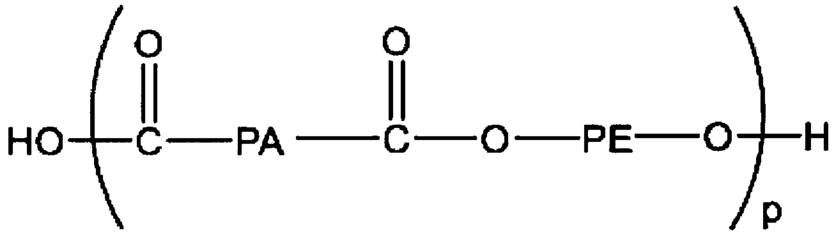

wherein PA represents a polyamide block, PE represents a polyether block, and p represents the length of the PEBA copolymer, which represents the total number of the polyamide and polyether blocks. In some embodiments of the disclosure, the PEBA copolymer can be represented by the following formula:

[Chem. 3]

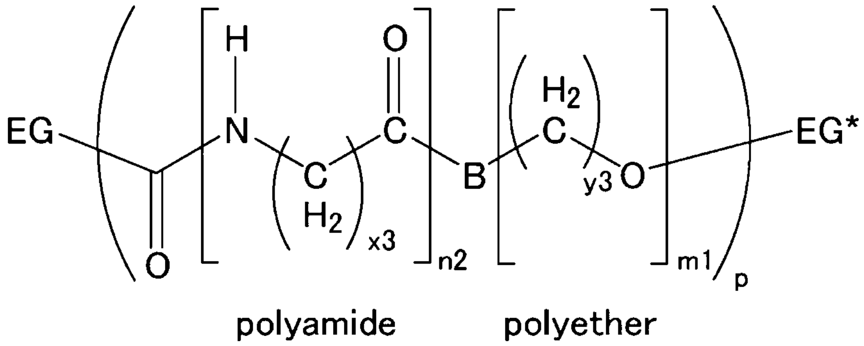

wherein EG represents a first unspecified end group; B represents an unspecified crosslinking group; and EG* represents a second unspecified end group, where EG, B, and EG* are determined by a synthesis method used for producing a PEBA copolymer, wherein n2 represents the length of the polyamide block; x3 represents the length of an amide component in the polyamide block; m1 represents the length of the poly(ether) block; y3 represents the length of an ether component in the poly(ether) block; and p represents the length of the PEBA copolymer, which represents the total number of the polyamide and polyether blocks.

In some embodiments of the disclosure, the PEBA copolymer can be represented by the following formula:

[Chem. 4]

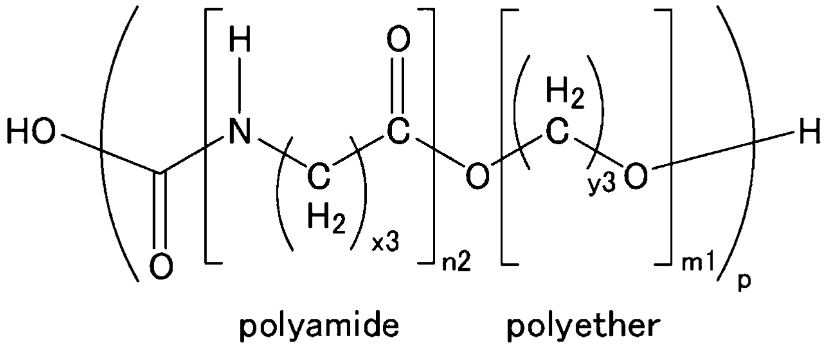

wherein n2 represents the length of the polyamide block; x3 represents the length of an amide component in the polyamide block; m1 represents the length of the poly(ether) block; y3 represents the length of an ether component in the poly(ether) block; and p represents the length of the PEBA copolymer, which represents the total number of the polyamide and polyether blocks.

The polyamide block in the PEBA copolymer is derived from polyamide-12 (PA-12), polyamide-11 (PA-11), polyamide-6 (PA-6), or polyamide-66 (PA-66).

The weight average molecular weight (e.g., Mw and Mn) of the PEBA copolymer can be determined, for example,

by gel permeation chromatography using a narrow molecular weight polymer standard based on a known technique in the technical field (i.e., by size-exclusion chromatography).

In an embodiment, the number average molecular weight Mn of the polyamide block in the PEBA copolymer is about 100 to about 15000 g/mol, or about 300 to about 15000 g/mol, or about 600 to about 10000 g/mol, or about 600 to about 5000 g/mol.

The number average molecular weight Mn of the polyether block in the PEBA copolymer is about 100 to about 15000 g/mol, about 100 to about 10000 g/mol, about 100 to about 6000 g/mol, about 100 to about 3000 g/mol, about 200 to about 6000 g/mol, about 200 to about 3000 g/mol, about 250 to about 2000 g/mol, about 750 to about 3500 g/mol, or about 1000 to about 3000 g/mol.

The PEBA copolymer has a number average molecular weight Mn of 10000 to 500000 g/mol, including any subrange within these ranges and any number within these ranges. In an embodiment of the disclosure, for example, the number average molecular weight Mn of the PEBA copolymer is 10000 to 400000 g/mol, or 10000 to 300000 g/mol, 10000 to 250000 g/mol, or 15000 to 300000 g/mol, or 20000 to 300000 g/mol, or 15000 to 200000 g/mol, or 20000 to 200000 g/mol, or 30000 to 250000 g/mol, or about 25000 to about 75000 g/mol, or about 50000 to about 75000 g/mol, or about 100000 to about 150000 g/mol.

The number average molecular weight Mn of the PEBA copolymer is at least 10000 g/mol, at least 20000 g/mol, at least 25000 g/mol, exceeding 25000 g/mol, at least 30000 g/mol, exceeding 30000 g/mol, at least 35000 g/mol, exceeding 35000 g/mol, at least 50000 g/mol, or exceeding 50000 g/mol.

In an embodiment, the PEBA copolymer has a weight average molecular weight Mw of 25000 to 500000 g/mol, including any subrange within these ranges and any number within these ranges. In an embodiment of the disclosure, for example, the weight average molecular weight Mw of the PEBA copolymer is about 100000 to about 250000 g/mol, or about 100000 to about 150000 g/mol, or about 125000 to about 150000 g/mol.

The polyamide and polyether blocks in the PEBA copolymer may be randomly distributed.

The PEBA copolymer contains a polyamide block and a polyether block and the polyamide block may occupy at least 50% by mass of the copolymer. The PEBA copolymer contains a polyamide block and a polyether block and the polyether block may occupy at least 50% by mass of the copolymer. The PEBA copolymer contains a polyamide block and a polyether block and the ratio by mole of the polyamide block to the polyether block may fall within a range of 1:3 to 3:1, or 1:2 to 2:1, or 3:2 to 1:3, or 2:3 to 3:1, or about 1:1.

The PEBA copolymer containing a polyamide block and a polyether block can be prepared by reacting precursors of the polyamide and polyether blocks. For example, a lactam, a polyether diol, and a chain-limiting dioic acid may be reacted together in the presence of a small amount of water, thereby producing a length-variable PEBA copolymer containing a polyamide block and a polyether block statistically randomly distributed in the block copolymer chain.

The polyether block may be derived from poly(oxyethylene), poly(oxypropylene), or poly(tetramethylene ether) glycol, each of which in the natural state may be co-condensed with a polyamide block having a carboxylic acid chain end. A chain-limiting agent may be present during the polycondensation reaction to provide a PEBA copolymer containing a polyamide block and a polyether block randomly distributed in the block copolymer.

The polyether block is derived from poly(oxyethylene), poly(oxypropylene), or poly(tetramethylene ether)glycol, each of which are first aminated into polyether diamine and then co-condensed with a polyamide block having a carboxylic acid chain end. A chain-limiting agent may be present during the polycondensation reaction to provide a PEBA copolymer containing a polyamide block and a polyether block randomly distributed in the block copolymer.

The polyether block can be derived from poly(oxyethylene), which is also known as polyethylene glycol (PEG).

The polyether block can be derived from poly(oxypropylene), which is also known as polypropylene glycol (PPG).

The polyether block can be derived from poly(tetramethylene ether)glycol (PTMG), which is also known as polytetramethylene oxide (PTMEO) or polytetrahydrofuran (PTHF).

The PEBA copolymer contains i) a polyamide block selected from polyamide-12 (PA-12), polyamide-11 (PA-11), polyamide-6 (PA-6), or a mixture of any of these and ii) a polyether block selected from polyethylene glycol (PEG), polypropylene glycol (PPG), polytetrahydrofuran (PTHF), or a mixture of any of these.

The PEBA copolymer contains i) a polyamide block selected from polyamide-12 (PA-12), polyamide-11 (PA-11), polyamide-6 (PA-6), or a mixture of any of these and ii) a polyether block which is polyethylene glycol (PEG). In an embodiment of the disclosure, the PEBA copolymer contains i) a polyamide block which is polyamide-12 (PA-12) and ii) a polyether block which is polyethylene glycol (PEG).

The PEBA copolymer contains 10 to 20 polyamide blocks and 10 to 20 polyether blocks.

The PEBA copolymer contains a single species of the polyamide block and a single species of the polyether block.

The PEBA copolymer contains i) a polyamide block which is polyamide-12 (PA-12) and ii) a polyether block which is polyethylene glycol (PEG), wherein the polyamide-12 block occupies about 30% by mass to 70% by mass of the copolymer and the polyethylene glycol block occupies about 70% by mass to 30% by mass of the copolymer.

The PEBA copolymer contains i) a polyamide block which is polyamide-12 (PA-12) and ii) a polyether block which is polyethylene glycol (PEG), wherein the polyamide-12 block occupies about 40% by mass to 60% by mass of the copolymer and the polyethylene glycol block occupies about 60% by mass to 40% by mass of the copolymer.

The PEBA copolymer contains i) a polyamide block which is polyamide-12 (PA-12) and ii) a polyether block which is polyethylene glycol (PEG), wherein the polyamide-12 block represents about 45% by mass of the copolymer and the polyethylene glycol block represents about 55% by mass of the copolymer.

The PEBA copolymer contains i) 10 to 20 polyamide blocks each of which is polyamide-12 (PA-12) and ii) 10 to 20 polyether blocks each of which is polyethylene glycol (PEG).

The PEBA copolymer contains i) a polyamide block which is polyamide-12 (PA-12) and ii) a polyether block which is polyethylene glycol (PEG), and has a number average molecular weight Mn of about 25000 to about 75000 g/mol.

The PEBA copolymer contains i) a polyamide block which is polyamide-12 (PA-12) and ii) a polyether block which is polyethylene glycol (PEG), and has a number average molecular weight Mn of about 50000 to about 75000 g/mol. The PEBA copolymer contains i) a polyamide block which is polyamide-12 (PA-12) and ii) a polyether block which is polyethylene glycol (PEG), and has a number average molecular weight Mn of about 66100 g/mol.

The PEBA copolymer contains i) a polyamide block which is polyamide-12 (PA-12) and ii) a polyether block which is polyethylene glycol (PEG), and has a weight average molecular weight Mw of about 100000 to about 150000 g/mol.

The PEBA copolymer contains i) a polyamide block which is polyamide-12 (PA-12) and ii) a polyether block which is polyethylene glycol (PEG), and has a weight average molecular weight Mw of about 125000 to about 150000 g/mol.

The PEBA copolymer contains i) a polyamide block which is polyamide-12 (PA-12) and ii) a polyether block which is polyethylene glycol (PEG), and has a weight average molecular weight Mw of about 134000 g/mol.

In an embodiment of the disclosure, the PEBA copolymer contains i) a polyamide block which is polyamide-6 (PA-6) and ii) a polyether block which is polyethylene glycol (PEG).

The PEBA copolymer contains i) a polyamide block which is polyamide-6 (PA-6) and ii) a polyether block which is polyethylene glycol (PEG), wherein the polyamide-6 block represents about 30% by mass to 60% by mass of the copolymer and the polyethylene glycol block represents about 70% by mass to 40% by mass of the copolymer.

The PEBA copolymer contains i) a polyamide block which is polyamide-6 (PA-6) and ii) a polyether block which is polyethylene glycol (PEG), wherein the polyamide-6 block represents about 50% by mass to 35% by mass of the copolymer and the polyethylene glycol block represents about 50% by mass to 65% by mass of the copolymer.

The PEBA copolymer contains i) 10 to 20 polyamide blocks each of which is polyamide-6 (PA-6) and ii) 10 to 20 polyether blocks each of which is polyethylene glycol (PEG) .

The PEBA copolymer contains i) a polyamide block which is polyamide-11 (PA-11) and ii) a polyether block which is polyethylene glycol (PEG). In an embodiment of the disclosure, the PEBA copolymer contains i) a polyamide block which is polyamide-12 (PA-12) and ii) a polyether block which is polytetrahydrofuran (PTHF).

The PEBA copolymer contains i) a polyamide block which is polyamide-12 (PA-12) and ii) a polyether block which is polytetrahydrofuran (PTHF), wherein the polyamide-12 block represents about 75% by mass to 10% by mass of the copolymer and the polytetrahydrofuran block represents about 25% by mass to 90% by mass of the copolymer.

The PEBA copolymer contains i) a polyamide block which is polyamide-12 (PA-12) and ii) a polyether block which is polytetrahydrofuran (PTHF), wherein the polyamide-12 block represents about 80% by mass to 60% by mass of the copolymer and the polytetrahydrofuran block represents about 20% by mass to 40% by mass of the copolymer.

The PEBA copolymer contains i) a polyamide block which is polyamide-12 (PA-12) and ii) a polyether block which is polytetrahydrofuran (PTHF), wherein the polyamide-12 block represents about 40% by mass to 60% by mass of the copolymer and the polytetrahydrofuran block represents about 60% by mass to 40% by mass of the copolymer.

The PEBA copolymer contains i) a polyamide block which is polyamide-12 (PA-12) and ii) a polyether block which is polytetrahydrofuran (PTHF), wherein the polyamide-12 block represents about 30% by mass to 10% by mass of the copolymer and the polytetrahydrofuran block represents about 70% by mass to 90% by mass of the copolymer.

The PEBA copolymer contains i) 10 to 20 polyamide blocks each of which is polyamide-12 (PA-12) and ii) 10 to 20 polyether blocks each of which is polytetrahydrofuran (PTHF).

The PEBA copolymer contains i) a polyamide block which is polyamide-12 (PA-12) and ii) a polyether block which is polytetrahydrofuran (PTHF), and has a number average molecular weight Mn of about 25000 to about 75000 g/mol.

The PEBA copolymer contains i) a polyamide block which is polyamide-12 (PA-12) and ii) a polyether block which is polytetrahydrofuran (PTHF), and has a number average molecular weight Mn of about 40000 to about 60000 g/mol. In an embodiment of the disclosure, the PEBA copolymer contains i) a polyamide block which is polyamide-12 (PA-12) and ii) a polyether block which is polytetrahydrofuran (PTHF), and has a number average molecular weight Mn of about 50000 g/mol.

The PEBA copolymer contains i) a polyamide block which is polyamide-6 (PA-6) and ii) a polyether block which is polytetrahydrofuran (PTHF).

The PEBA copolymer contains i) a polyamide block which is polyamide-11 (PA-11) and ii) a polyether block which is polytetrahydrofuran (PTHF).

The PEBA copolymer is a commercially available elastomer and is marketed under the trade name of PEBAX®.

The PEBA copolymer is a commercially available elastomer selected from the group consisting of: PEBAX 2533 SA 01, PEBAX 2533 SA 01 MED, PEBAX 2533 SD 02, PEBAX 3533 SA 01, PEBAX 3533 SA 01 MED, PEBAX 3533 SP01, PEBAX 4011, PEBAX 4033 SA 01, PEBAX 4033 SA 01 MED, PEBAX 4033 SP01, PEBAX 4533 SA 01, PEBAX 4533 SA 01 MED, PEBAX 4533 SP01, PEBAX 5513 SA 01, PEBAX 5513 SP01, PEBAX 5533 SA 01, PEBAX 5533 SA 01 MED, PEBAX 5533 SN 70 BLACK, PEBAX 5533 SP01, PEBAX SA 01, PEBAX 6333 SA 01 MED, PEBAX SP01, PEBAX 6333 SP01, PEBAX 6333 SA 01, PEBAX, PEBAX 3533 SA 01, PEBAX 3533 SA 01 MED, PEBAX 3533 SP01, PEBAX 4011 SA 01, PEBAX 4033 SA 01 MED, PEBAX 4033 SP01, PEBAX 4033 SA 01 MED, PEBAX Clear 2533, PEBAX ES 2533 UV, PEBAX MH 2533, PEBAX MH2030, PEBAX MV 5513 SA 01, PEBAX MV 5513 SA 01 MED, PEBAX MV 5533 SP01, PEBAX MV 5533, PEBAX MV 5533 SP01, PEBAX RNEW® 30R51 SA 01, PEBAX RNEW 35R53 SP01, PEBAX RNEW 70R53 SP01, PEBAX RNEW 55R53 SP01, PEBAX RNEW 63R53 SP01, PEBAX RNEW 70R53 SP01, PEBAX RNEW 70R53 SP01, PEBAX, PEBAX RNEW 72R53 SP01, PEBAX RNEW 80R53 SP 02, and a mixture of any of these.

The PEBA copolymer is a commercially available elastomer and is marketed under the trade name of VESTAMID® or VESTAMID E.

The PEBA copolymer is a commercially available elastomer selected from the group consisting of VESTAMID D, VESTAMID DX, VESTAMID E, VESTAMID EX, VESTAMID Care, VESTAMID Care ML, VESTAMID Care ME, VESTAMID Care ME-B, VESTAMID L, VESTAMID LX, VESTAMID NRG, VESTAMID Terra, VESTAMID X, and a mixture of any of these. Preferred among these is Pebax MV 1072.

The PEBA copolymer may be used in the form of semisolid or viscous liquid, or in the form of powder, pellets, or granules.

The amount of the synergist in the processing aid of the disclosure is preferably 0.1% by mass or more, more preferably 0.5% by mass or more, still more preferably 1% by mass or more, while preferably 99% by mass or less, more preferably 70% by mass or less, still more preferably 40% by mass or less.

In the processing aid of the disclosure, the mass ratio of the total amount of the lubricant (A) and the resin (B) to the amount of the synergist (lubricant (A) + resin (B): synergist) is preferably 99.9:0.1 to 10:90.

The mass ratio is more preferably 99.5:0.5 to 30:70, still more preferably 99:1 to 50:50, particularly preferably 98:2 to 60:40.

Examples of the different component include an anti-agglomerating agent; an ultraviolet absorber; a flame retarder; a reinforcing material such as glass fiber or glass powder; a stabilizer such as mineral or flaky material; a lubricant such as silicone oil or molybdenum disulfide; a pigment such as titanium dioxide or red iron oxide; a conductive agent such as carbon black; an impact resistance improver such as rubber; an antioxidant such as a hindered phenol- or phosphorus-based antioxidant; a nucleating agent such as metal salt or acetal of sorbitol; and an antiblocking agent.

The mass ratio of the lubricant (A) to the resin (B) (lubricant (A) :resin (B)) in the processing aid of the disclosure is preferably 1:99 to 99:1, more preferably 2:98 to 40:60, most preferably 4:96 to 10:90.

From the viewpoint of excellent storage stability, multiple resins (B) are preferably used. In such a case, EVOH (resin (B1)) and a resin (B) other than EVOH (resin (B2)) are preferably used in combination. The resin (B2) is not limited. Still, the resin (B2) is preferably PLA or PBS, more preferably PLA. In other words, the resin (B) is preferably a combination of EVOH and at least one of PLA or PBS, more preferably a combination of EVOH and PLA.

The mass ratio of the lubricant (A), the resin (B1), and the resin (B2) (lubricant (A):resin (B1):resin (B2)) is preferably (1 to 98):(1 to 98):(1 to 98), more preferably (2 to 70): (5 to 73): (25 to 93), most preferably (4 to 18):(10 to 24):(72 to 86).

The total amount of the lubricant (A), the resin (B), and the synergist in the processing aid of the disclosure is preferably 25% by mass or more, more preferably 35% by mass or more, still more preferably 55% by mass or more, particularly preferably 85% by mass.

The processing aid of the disclosure is preferably substantially free from fluorine. The phrase "substantially free from fluorine" means that the processing aid has a fluorine content of 10 ppm or less (preferably 1 ppm or less, more preferably 0.1 ppm or less). The processing aid of the disclosure is particularly preferably free from fluorine (has a fluorine content of 0% by mass).

The water content of the processing aid is preferably 1.0% by mass or less, more preferably 0.5% by mass or less, still more preferably 0.2% by mass or less, most preferably 0.1% by mass or less. The lower limit may be, but is not limited to, 0% by mass.

The water content herein is determined by the following method.

The mass of the processing aid is weighed before and after heating at 130°C for 24 hours, and the water content is calculated by the following equation. Three samples are taken, and this calculation is performed for each sample and the values are averaged.

Water content (% by mass) = [(Mass (g) of processing aid before heating) - (Mass (g) of processing aid after heating)]/(Mass (g) of processing aid before heating) $\times$ 100

The processing aid having a water content within the above range can be obtained by any method. For example, a processing aid may be produced using materials with low water content under dry conditions, or a processing aid may be produced using normal materials under normal conditions and water may be removed therefrom by, for example, heat treatment.

The processing aid of the disclosure may be obtained by a mixing step of mixing the lubricant (A) and the resin (B) fed to a mixer or the like and an ejecting step of ejecting the mixture from the mixer, for example. The disclosure also relates to a method for producing the aforementioned processing aid including a mixing step and an ejecting step.

The process in the mixing step may be, but is not limited to, mixing (kneading) with a shear force or mixing without a shear force. To effectively achieve the molding processibility, kneading is preferred, and melt-kneading is more preferred.

In the case of melt-kneading, the components may be melted in the mixing step or may be melted before the mixing step.

In the production method, the ejecting step may be followed by a molding step of molding the ejected matter using a molding machine, for example.

Examples of the process in the molding step include, but are not limited to, extrusion molding, injection molding, and blow molding. To effectively achieve the molding processibility, extrusion molding is preferred among these.

The extrusion molding is performed using an extruder. Examples of the extruder include a single-screw extruder, a twin-screw extruder, and a tandem extruder. The extruder commonly includes a cylinder, a screw housed in the cylinder, a die attached to the tip of the cylinder, and a hopper for feeding pellets to the cylinder.

The conditions relating to the molding are not limited and may be set as appropriate in accordance with, for example, the compositional ratio and amount of the composition as well as the shape and size of a desired molded article.

The processing aid of the disclosure is particularly useful as a processing aid for thermoplastic resin (particularly, polyolefin resin).

<Masterbatch>

The masterbatch of the disclosure contains the processing aid of the disclosure and a thermoplastic resin (C).

The processing aid of the disclosure as it is may be added to a target such as a thermoplastic resin or may be added in the form of a masterbatch. Adding the processing aid in the form of a masterbatch can lead to weighing stability and good dispersibility.

Examples of the thermoplastic resin (C) include a polyolefin polymer (e.g., polyethylene (PE), polypropylene (PP), and an ethylene-propylene copolymer), polystyrene (PS), acrylonitrile styrene (AS) resin (AS), acrylonitrile butadiene styrene (ABS) resin (ABS), methacrylic resin (PMMA), polymethyl pentene (PMP), polybutadiene resin (BDR), polybutene-1 (PB-1), polyvinyl alcohol (PVA), polyacrylonitrile (PAN), polystyrene methacrylate (MS), an ethylene-vinyl acetate copolymer (EVA), an ethylene-vinyl alcohol copolymer, and polyvinyl chloride (PVC). Each of these may be used alone or two or more of these may be used in combination. To achieve a better effect of improving the processibility, a polyolefin polymer (polyolefin resin) is preferred.

An example of the polyolefin polymer is a homopolymer (e.g., a homopolymer of a C2-C10 $\alpha$-olefin, preferably a C2-C6 $\alpha$-olefin). Specific examples of the homopolymer include homo-polyethylene and homo-polypropylene (hPP). In the case of homo-polyethylene, for example, this polymer can be produced by free-radical polymerization in a high-pressure process and is typically known as a highly branched ethylene homopolymer, which is often referred to as LDPE (low-density polyethylene), having a density of lower than 0.945 g/cm$^3$, often 0.935 g/cm$^3$ or lower, e.g., within a range from 0.900, 0.905, or 0.910 g/cm$^3$ to 0.920, 0.925, 0.927, 0.930, 0.935, or 0.945 g/cm$^3$. Unless otherwise described herein, the densities of all polymers are determined in conformity with ASTM D1505. A sample is formed through the step C of ASTM D4703-10a and left under the conditions in ASTM D618-08 (23 $\pm$ 2°C and relative humidity 50 $\pm$ 10%) for 40 hours before testing.

In another example, an ethylene monomer can be polymerized in a phase of a known gas, slurry, and/or solution (using, e.g., a catalyst such as chromium catalyst or a single site catalyst such as Ziegler-Natta and/or metallocene catalyst), each of which is well known in the polymerization technique and is therefore not elaborated herein. In the case of producing a more highly linear ethylene homopolymer (e.g., using gas-phase or slurry-phase polymerization with any of the above catalysts), this is referred to as HDPE (high-density polyethylene), which typically has a density of 0.945 g/cm$^3$ or higher, e.g., within a range from 0.945 to 0.970 g/cm$^3$.

Examples of the polymer also include copolymers of two or more C2-C40 $\alpha$-olefins, e.g., C2-C20 $\alpha$-olefins, such as ethylene-$\alpha$-olefin copolymers and propylene-$\alpha$-olefin copolymers (e.g., a propylene-ethylene copolymer and a propylene-ethylene-diene terpolymer (also known as EPDM and PEDM)). Specific examples intended herein include an ethylene copolymer and one or more C3-C20 $\alpha$-olefin comonomers such as a C4-C12 $\alpha$-olefin comonomer (1-butene, 1-hexene, 1-octene, or a mixture of any two or more of these is preferred in a variety of embodiments). The ethylene copolymer (e.g., a copolymer of ethylene and one or more C3-C20 $\alpha$-olefins) may contain an ethylene-derived unit in an

amount of at least 90, 94, 95, or 96% by weight (e.g., within a range from a lower value of 80, 85, 90, 80, 85, 93, 93, 95, 96, or 97 wt% to a higher value of 94, 95, 95.5, 91, 92, 97, 94, 97.5, or 98 wt%; at least 96 wt% or 96.5 wt%), and may contain the unit in an amount within the range from any of the lower values to any of the higher values based on the total amount of the ethylene-derived unit and a comonomer-derived unit. For example, the ethylene copolymer may contain 94 or 95% by mass to 97 or 98% by mass of an ethylene-derived unit based on the total amount of the ethylene-derived unit and a comonomer-derived unit. The balance of the copolymer (based on the ethylene-derived unit and the comonomer-derived unit) consists of the comonomer-derived unit. For example, a comonomer unit (e.g., a unit derived from a C2-C20 α-olefin such as a unit derived from butene, hexene, and/or octene) may be present in an amount within a range from a lower value of 2, 2.5, 3, 3.5, 4, 4.5, 5, or 6% by mass to a higher value of 3, 4, 5, 6, 7, 8, 9, 10, 15, or 20% by mass, and the range thereof is from any of the above lower values to any intended value among the above higher values (provided that the higher value is greater than the lower value).

Some appropriate comonomers have already been known for ethylene-based, propylene-based, or other α-olefin-based copolymers; in various embodiments, other α-olefin comonomers are intended. For example, the α-olefin comonomer may be linear or branched, and two or more comonomers may be used as appropriate. Examples of appropriate comonomers include C3-C20 linear α-olefins (e.g., butene, hexene, and octene, as described above) and α-olefins having one or more C1-C3 alkyl branches or aryl groups. Examples include: propylene; 3-methyl-1-butene; 3,3-dimethyl-1-butene; 1-pentene; 1-pentene having one or more methyl, ethyl, or propyl substituents; 1-hexene having one or more methyl, ethyl, or propyl substituents; 1-heptene having one or more methyl, ethyl, or propyl substituents; 1-octene having one or more methyl, ethyl, or propyl substituents; 1-nonene having one or more methyl, ethyl, or propyl substituents; ethyl-, methyl- or dimethyl-substituted 1-decene; 1-dodecene; and styrene. The above list of comonomers shows mere examples and is not intended to set any limitation. In some embodiments, the comonomer includes propylene, 1-butene, 1-pentene, 4-methyl-1-pentene, 1-hexene, 1-octene, and styrene.

In a specific embodiment, the polymer may include an ethylene copolymer or may be an ethylene copolymer (according to the above description). The ethylene copolymer can be produced by gas, slurry, or solution phase polymerization. Some particularly preferred ethylene copolymers can be produced by gas or slurry phase polymerization. Specific examples include linear low-density polyethylene (LLDPE) and a copolymer of ethylene and one or more α-olefins, which are polymerized in the presence of one or more single site catalysts, e.g., one or more Ziegler-Natta catalysts, one or more metallocene catalysts, or combination of any of these. This LLDPE may have a density within a range from a lower concentration of 0.900, 0.905, 0.907, or 0.910 g/cm$^3$ to a higher concentration of 0.920, 0.925, 0.930, 0.935, 0.940, or 0.945 g/cm$^3$. LLDPE is distinguishable from the aforementioned LDPE in some respects, many of which are well-known in the technical field, including the degree of branching (in many cases, there are few branches, if present) in the polymer produced. It should be noted that LLDPE has substantially a small number of long chain branches. In a specific embodiment, the polymer of the polymer composition is or includes a metallocene-catalyzed LLDPE (mLLDPE). In other embodiments, the polymer of the polymer composition is or includes a Ziegler-Natta-catalyzed LLDPE (or ZN-LLDPE).

In some embodiments, the density of the polymer falls within a range from 0.905 to 0.945 g/cm$^3$, e.g., from a lower value of 0.905, 0.907, 0.908, 0.910, 0.911, 0.912, 0.913, 0.914, or 0.915 g/cm$^3$ to a higher value of 0.916, 0.917, 0.918, 0.919, 0.920, 0.924, 0.926, 0.930, 0.935, 0.940, or 0.945 g/cm$^3$, and the range thereof is from any of the above lower values to any of the above higher values intended herein (e.g., from 0.910 to 0.925 or 0.935 g/cm$^3$, e.g., from 0.912 to 0.925 or from 0.915 to 0.918 g/cm$^3$). In other embodiments, the polymer may be a higher-density one (e.g., HDPE) having a density within a range from 0.945 g/cm$^3$ to 0.970 g/cm$^3$.

The rheological characteristics of a polymer can have influence on the processing aid composition for forming a molded article. In common cases, a processing aid composition is preferably used in a polymer having a melt index (MI or I2 is measured at 190°C and a 2.16 kg load in conformity with ASTM D1238) of 1.5 g/2.0 min or lower, preferably 2.5 g/3.0 min or lower, such as within a range from 0.1, 0.2, or 0.5 g/10 min to 1.0, 1.2, 5.0, 10, 2.5, 10, 4.0, or 5.0 g/10 min. In some embodiments, the polymer may commonly have a melt index ratio (MIR) (MIR herein is defined as the ratio of the high-load melt index (HLMI) (determined at 190°C and a 21.6 kg load per ASTM D1238) to the melt index or as HLMI/MI) within a range from 10, 12, or 15 to 19, 20, 21, 22, 25, 27, 30, 35, 40, 45, 50, 60, 65, 70, 75, 80, 85, 90, 95, or 100. If necessary, this polymer may have a MI of lower than 1.5 g/10 min, such as 1.0 g/10 min or lower (e.g., from 0.1, 0.2, or 0.5 g/10 min to 1.0; or any of 1.1, 1.2, 1.3, or 1.4, or lower than 1.5 g/10 min).

The LLDPE preferably includes at least one selected from the group consisting of a Ziegler-Natta-catalyzed LLDPE and a metallocene-catalyzed LLDPE. Particularly preferred is a metallocene-catalyzed LLDPE.

The thermoplastic resin (C) may have crystallinity or may have no crystallinity. The thermoplastic resin (C) having crystallinity has a melting point of preferably 80°C to 300°C, more preferably 100°C to 200°C. The thermoplastic resin (C) having no crystallinity preferably has a processing temperature substantially equal to that of a thermoplastic resin (C) whose melting point range is indicated by its crystallinity.

In the masterbatch of the disclosure, the mass ratio of the thermoplastic resin (C) to the processing aid (thermoplastic resin (C):processing aid) is preferably 99:1 to 1:99. The mass ratio is more preferably 97:3 to 50:50, still

more preferably 95:5 to 60:40, particularly preferably 92:8 to 70:30.

The total amount of the thermoplastic resin (C) and the processing aid in the masterbatch of the disclosure is preferably 80% by mass or more, more preferably 90% by mass or more, still more preferably 95% by mass or more, particularly preferably 100% by mass.

The masterbatch of the disclosure has a melt flow rate (MFR) of preferably 0.1 g/10 min or higher, more preferably 0.5 g/10 min or higher, still more preferably 1 g/10 min or higher, further preferably 1.5 g/10 min or higher, while preferably 100 g/10 min or lower, more preferably 50 g/10 min or lower, still more preferably 30 g/10 min or lower, further preferably 20 g/10 min or lower, particularly preferably 10 g/10 min or lower. The masterbatch having a MFR within this range can lead to a better effect of improving the processibility.

The masterbatch of the disclosure may contain a component different from the thermoplastic resin (C) and the processing aid.

Examples of the component different from the thermoplastic resin (C) and the processing aid include an anti-agglomerating agent; an ultraviolet absorber; a flame retarder; a reinforcing material such as glass fiber or glass powder; a stabilizer such as mineral or flaky material; a lubricant such as silicone oil or molybdenum disulfide; a pigment such as titanium dioxide or red iron oxide; a conductive agent such as carbon black; an impact resistance improver such as rubber; an antioxidant such as a hindered phenol- or phosphorus-based antioxidant; a nucleating agent such as metal salt or acetal of sorbitol; an antiblocking agent; and the aforementioned lubricant (A) .

The masterbatch of the disclosure may be obtained by a mixing step of mixing the processing aid of the disclosure, which is prepared in advance, and the thermoplastic resin (C) fed to a mixer or the like and an ejecting step of ejecting the mixture from the mixer, or may be obtained by a mixing step of mixing the thermoplastic resin (C), the lubricant (A), and the resin (B) fed to a mixer or the like and an ejecting step of ejecting the mixture from the mixer, for example. The disclosure also relates to a method for producing the aforementioned masterbatch including a mixing step and an ejecting step.

In the method for producing a masterbatch of the disclosure, the ejecting step may be followed by a molding step of molding the ejected matter using a molding machine, for example.

The mixing step, the ejecting step, and the molding step in the method for producing a masterbatch of the disclosure are the same as those described for the method for producing a processing aid of the disclosure. The masterbatch of the disclosure may be in any form such as powder, granules, or pellets; to achieve excellent handleability and easy molding, pellets are preferred.

The masterbatch of the disclosure is particularly useful as a masterbatch for improving the processibility of thermoplastic resin (particularly, polyolefin resin).

<Thermoplastic resin composition>

The thermoplastic resin composition of the disclosure contains at least one of the processing aid of the disclosure or the masterbatch of the disclosure, and a thermoplastic resin (D). This leads to good processibility. In particular, good extrusion processibility is achieved even in long-run molding. Moreover, the resulting extruded product has excellent storage stability.

The thermoplastic resin (D) may be the same as the thermoplastic resin (C), and a preferred form thereof is also the same as that of the thermoplastic resin (C). The masterbatch of the disclosure contains the processing aid of the disclosure and a thermoplastic resin (C). The processing aid of the disclosure as it is may be added to a target such as a thermoplastic resin or may be added in the form of a masterbatch.

The thermoplastic resin composition of the disclosure at least contains at least one of the processing aid of the disclosure or the masterbatch of the disclosure, and preferably contains the masterbatch of the disclosure to achieve better processibility.

In the case where the thermoplastic resin composition of the disclosure contains the masterbatch of the disclosure, the thermoplastic resin (C) and the thermoplastic resin (D) may be the same as or different from each other.

The amount of the processing aid in the thermoplastic resin composition of the disclosure is preferably 0.001% by mass or more, more preferably 0.02% by mass or more, still more preferably 0.04% by mass or more, particularly preferably 0.06% by mass or more, while preferably 3% by mass or less, more preferably 2% by mass or less, still more preferably 1% by mass or less, particularly preferably 0.6% by mass or less.

The thermoplastic resin composition of the disclosure may contain a component different from the processing aid, the masterbatch, and the thermoplastic resin (D).

Examples of the component different from the processing aid, the masterbatch, and the thermoplastic resin (D) include an anti-agglomerating agent; an ultraviolet absorber; a flame retarder; a reinforcing material such as glass fiber or glass powder; a stabilizer such as mineral or flaky material; a lubricant such as silicone oil or molybdenum disulfide; a pigment such as titanium dioxide or red iron oxide; a conductive agent such as carbon black; an impact resistance improver such as rubber; an antioxidant such as a hindered phenol- or phosphorus-based antioxidant; a nucleating agent such as

metal salt or acetal of sorbitol; an antiblocking agent; and the aforementioned lubricant (A).

The thermoplastic resin composition of the disclosure may be obtained by a mixing step of mixing the masterbatch of the disclosure, which is prepared in advance, and the thermoplastic resin (D) fed to a mixer or the like and an ejecting step of ejecting the mixture from the mixer, or may be obtained by a mixing step of mixing the thermoplastic resin (D), the lubricant (A), the resin (B), and optionally the thermoplastic resin (C) fed to a mixer or the like and an ejecting step of ejecting the mixture from the mixer, for example. The disclosure also relates to a method for producing the aforementioned thermoplastic resin composition including a mixing step and an ejecting step.

In the method for producing a thermoplastic resin composition of the disclosure, the ejecting step may be followed by a molding step of molding the ejected matter using a molding machine, for example.

The mixing step, the ejecting step, and the molding step in the method for producing a thermoplastic resin composition of the disclosure are the same as those described for the method for producing a processing aid of the disclosure.

<Molded article>

The molded article of the disclosure is obtainable from the thermoplastic resin composition of the disclosure and may be obtainable by, for example, a molding step of molding the thermoplastic resin composition of the disclosure.

The disclosure also relates to a method for producing a molded article including a molding step.

The thermoplastic resin composition of the disclosure is suitable for a molded article in the form of a tube, a film, or a sheet, and may be applicable to a molded article in a different form.

The molding step is the same as that described for the method for producing a processing aid of the disclosure.

In the molding step, the molding temperature (extrusion temperature) during molding is commonly equal to or higher than the melting point of the thermoplastic resin (D) and lower than the decomposition temperature of the lubricant (A) and lower than the decomposition temperature of the resin (B). In the case where component(s) different from the lubricant (A) and the resin (B) is/are contained, the molding temperature is preferably set in consideration of such component(s). To allow the processing aid to significantly exert its effects, the molding temperature preferably falls within a range of 160°C or higher and 270°C or lower.

The molding temperature may also be referred to the extrusion temperature in the case of extrusion molding.

Examples of applications of the molded article of the disclosure include, but are not limited to, bags, coating materials, dishware such as drink containers, electric wires, cables, pipes, fibers, bottles, gasoline tanks, and other industrial molded articles.

It should be appreciated that a variety of modifications and changes in the structure and other details may be made to the aforementioned embodiments without departing from the spirit and scope of the claims.

EXAMPLES

The disclosure is described with reference to, but not limited to, examples.

The following materials were used in the examples and the comparative examples.

(Lubricant (A))

Polysolbate 60: Polysolbate 60 (MFR: > 500 g/10 min)
Zn-St: zinc stearate (MFR: > 500 g/10 min)
MG-C18(OH): magnesium 12-hydroxystearate (MFR: > 500 g/10 min)
PE-wax #1: generally polymerized polyethylene wax (acid value: 0 mgKOH/g, melting point: 122°C, melt viscosity (140°C): 80 mPa·s, MFR: > 500 g/10 min)
PE-wax #2: metallocene-catalyzed polyethylene wax (acid value: 0 mgKOH/g, melting point: 100°C, melt viscosity (140°C): 300 mPa·s, MFR: > 500 g/10 min)
PE-wax #3: acid-modified polyethylene wax (acid value: 17 mgKOH/g, melting point: 107°C, melt viscosity (140°C): 300 mPa·s, MFR: > 500 g/10 min)
PE-wax #4: oxidized (highly oxidized) polyethylene wax (acid value: 30 mgKOH/g, melting point: 102°C, melt viscosity (140°C): 265 mPa·s, MFR: > 500 g/10 min)

(Resin (B1))

EVOH: ethylene-vinyl alcohol copolymer (ethylene content: 38 mol%, MFR: 1.6 g/10 min, melting point: 172°C)
PLA: polylactic acid (MFR: 3 g/10 min, melting point: 153°C)
PBS: polybutylene succinate (MFR: 22 g/10 min, melting point: 114°C)

(Resin (B2))

PLA: polylactic acid (MFR: 3 g/10 min, melting point: 153°C)
PBS: polybutylene succinate (MFR: 22 g/10 min, melting point: 114°C)

(Matrix resin and carrier resin)

m-LLDPE-1: metallocene-catalyzed linear low-density polyethylene (MFR: 0.7 g/10 min, melting point: 123°C, d = 0.926, MIR = 28.1)
m-LLDPE-2: metallocene-catalyzed linear low-density polyethylene (MFR: 2.0 g/10 min, melting point: 121°C, d = 0.925, MIR = 23.6)
ZN-LLDPE-1: Ziegler-Natta-catalyzed linear low-density polyethylene (MFR: 0.8 g/10 min, melting point: 123°C, d = 0.925, MIR = 27.0)
ZN-LLDPE-2: Ziegler-Natta-catalyzed linear low-density polyethylene (MFR: 2.0 g/10 min, melting point: 121°C, d = 0.918, MIR = 23.2)

(Different additive (E) (synergist))

PCL: polycaprolactone (Mw: 80000, melting point: 55°C)
PEG-1: polyethylene glycol (Mn: 8000, melting point: 63°C)
MB50-002: silicone (ultra-high molecular weight silicone-containing masterbatch, available from Dupont)
GENIOPLAST PELLET S: silicone (ultra-high molecular weight silicone, available from Wacker Asahikasei Silicone Co., Ltd.)
Pebax MV1072: polyamide-polyether block copolymer (available from Arkema)

Comparative Examples 1 to 5, Examples 1 to 87

First, the matrix resin (thermoplastic resin (D)), the lubricant (A), the resin (B1), and the resin (B2) were melt-kneaded in the proportions shown in Table 1 or 2 using a twin-screw extruder (TEX25αIII available from Japan Steel Works, Ltd.) under the conditions including a cylinder temperature of 180°C to 200°C, a die temperature of 200°C, and a screw rotational speed of 400 rpm, whereby a compound was obtained. Next, the processibility of the resulting compound was evaluated as in <Extrusion evaluation> described below. The results are shown in Table 1 or 2. The materials of the lubricant (A), the resin (B1), and the resin (B2) contained no fluorine and the processing aid therefore had a fluorine content of 0% by mass.

Examples 88 to 90

First, the carrier resin (thermoplastic resin (C)), the lubricant (A), the resin (B1), and the resin (B2) were melt-kneaded in the proportions shown in Table 3 using a twin-screw extruder (TEX25αIII available from Japan Steel Works, Ltd.) under the conditions including a cylinder temperature of 180°C to 200°C, a die temperature of 200°C, and a screw rotational speed of 400 rpm such that the total concentration of the lubricant (A), the resin (B1), and the resin (B2) was 25% by mass, whereby a masterbatch (MB) was obtained. The masterbatch obtained was then dry blended with the matrix resin in the proportion shown in Table 3, and the processibility in this case was evaluated as in <Extrusion evaluation> described below. The results are shown in Table 3. The materials of the lubricant (A), the resin (B1), and the resin (B2) contained no fluorine and the processing aid therefore had a fluorine content of 0% by mass.

Examples 91 to 95

First, the matrix resin (thermoplastic resin (D)), the lubricant (A), the resin (B1), the resin (B2), and different additive(s) were melt-kneaded in the proportions shown in Table 4 using a twin-screw extruder (TEX25αIII available from Japan Steel Works, Ltd.) under the conditions including a cylinder temperature of 180°C to 200°C, a die temperature of 200°C, and a screw rotational speed of 400 rpm, whereby a compound was obtained. Next, the processibility of the resulting compound was evaluated as in <Extrusion evaluation> described below. The results are shown in Table 4. The materials of the lubricant (A), the resin (B1), and the resin (B2) contained no fluorine and the processing aid therefore had a fluorine content of 0% by mass.

<Extrusion evaluation>

Each material was extruded for 60 minutes through a single screw extruder (Rheomex OS available from HAAKE, L/D: 33, screw diameter: 20 mm, die diameter: 2 mm) under the conditions including a cylinder temperature of 170°C to 200°C, a die temperature of 200°C, and a shear rate of 450/sec, which was evaluated for the following items.

Before each test operation, linear low-density polyethylene containing 15% by mass of silica was fed into a hopper and the screw rotational speed was increased to 150 rpm to perform purging for about 15 minutes. The same matrix resin as one to be used for the test was then fed to perform purging for about 15 minutes. The screw rotational speed was returned to 30 rpm and extrusion was performed until the temperature stabilized. After the pressure surely returned to the initial pressure, a next experiment was performed. If the pressure did not return to the initial value, the above purging process was repeated until the pressure returned to the initial value and a next experiment was then performed.

(Melt fracture (MF) state)

The matrix resin alone was extruded until the pressure was stabilized while melt fracture occurred on the entire surface. The point of time at which the screw appeared was defined as zero, and the matrix resin was then extruded for 60 minutes. In the examples where the processing aid or the masterbatch was used, they were fed to the hopper at the zero point. The appearance of a strand at an early stage of extrusion and the appearance of a strand at completion of extrusion were checked by visual and tactile inspection. A change in MF, which was observed at an early stage of extrusion, was evaluated by the following criteria. The smaller the value is, the better the MF state is.

Disappeared: MF completely disappeared.

Not disappeared: MF hardly changed, or MF reduced but not completely disappeared in comparison with the case of matrix resin alone.

(Die buildup (DBU))

For the sample in which MF completely disappeared, extrusion evaluation was performed by long-run molding (three hours). The state of the die after extrusion was visually observed and the presence of DBU (die drool) was evaluated.

The DBU was evaluated in 5 grades from 1 to 5. The smaller the value is, the smaller the amount of DBU occurred and the better the evaluation is, with the grade 1 indicating no occurrence of DBU.

(Storage stability test)

In Example 5, Example 12, Example 17, Example 22, Example 30, Example 31, and Example 81, long-run molding (three hours) was performed and a strand sample was collected, which was left to stand at 80°C for 24 hours. After 24 hours had passed, the strand was subjected to sensory evaluation (tactile sensation) for the surface smoothness and the smoothness was evaluated before and after the test according to the following criteria (presence or absence of bleeding out). The results are shown in Tables 1 and 2.

Yes: The smoothness after the test was higher than that before the test.

No: The smoothness did not change before and after the test.

[Table 1]

| | Thermoplastic resin D | Composition of processing aid | | | | Concentration of processing aid in resin composition (A+B1+B2)/(D+A+B1+B2) (ppm) | Extrusion evaluation | | Storage stability |
|---|---|---|---|---|---|---|---|---|---|
| | | Lubricant A | Resin B1 | Resin B2 | Mass ratio in processing aid (A/B1/B2) | | Disappearance of MF | DBU (5 grades) | Bleeding out |
| Comparative Example 1 | m-LLDPE-1 | - | - | - | - | - | Not disappeared | 5 | |
| Comparative Example 2 | m-LLDPE-1 | - | EVOH | - | 0/100/0 | 1500 | Disappeared | 5 | |
| Comparative Example 3 | m-LLDPE-1 | Polysorbate60 | - | - | 100/0/0 | 1500 | Not disappeared | - | |
| Comparative Example 4 | m-LLDPE-1 | Zn-St | - | - | 100/0/0 | 1500 | Not disappeared | - | |
| Comparative Example 5 | m-LLDPE-1 | PE-wax#1 | - | - | 100/0/0 | 1500 | Not disappeared | - | |
| Example 1 | m-LLDPE-1 | Zn-St | EVOH | - | 10/90/0 | 1500 | Disappeared | 1 | |
| Example 2 | m-LLDPE-1 | Zn-St | EVOH | - | 60/40/0 | 1500 | Disappeared | 3 | |
| Example 3 | m-LLDPE-1 | Zn-St | EVOH | - | 20/80/0 | 1500 | Disappeared | 2 | |
| Example 4 | m-LLDPE-1 | Zn-St | EVOH | - | 40/60/0 | 1500 | Disappeared | 2 | |
| Example 5 | m-LLDPE-1 | Zn-St | EVOH | - | 30/70/0 | 1500 | Disappeared | 2 | Yes |
| Example 6 | m-LLDPE-1 | Zn-St | EVOH | - | 30/70/0 | 1000 | Disappeared | 2 | |
| Example 7 | m-LLDPE-1 | Zn-St | EVOH | - | 30/70/0 | 600 | Disappeared | 2 | |
| Example 8 | m-LLDPE-1 | Mg-C18(OH) | EVOH | - | 10/90/0 | 1500 | Disappeared | 1 | |
| Example 9 | m-LLDPE-1 | Mg-C18(OH) | EVOH | - | 60/40/0 | 1500 | Disappeared | 3 | |
| Example 10 | m-LLDPE-1 | Mg-C18(OH) | EVOH | - | 20/80/0 | 1500 | Disappeared | 2 | |
| Example 11 | m-LLDPE-1 | Mg-C18(OH) | EVOH | - | 40/60/0 | 1500 | Disappeared | 2 | |
| Example 12 | m-LLDPE-1 | Mg-C18(OH) | EVOH | - | 30/70/0 | 1500 | Disappeared | 2 | Yes |
| Example 13 | m-LLDPE-1 | Polysorbate60 | EVOH | - | 10/90/0 | 1500 | Disappeared | 1 | |
| Example 14 | m-LLDPE-1 | Polysorbate60 | EVOH | - | 60/40/0 | 1500 | Disappeared | 3 | |
| Example 15 | m-LLDPE-1 | Polysorbate60 | EVOH | - | 20/80/0 | 1500 | Disappeared | 2 | |
| Example 16 | m-LLDPE-1 | Polysorbate60 | EVOH | - | 40/60/0 | 1500 | Disappeared | 2 | |
| Example 17 | m-LLDPE-1 | Polysorbate60 | EVOH | - | 30/70/0 | 1500 | Disappeared | 2 | Yes |

(continued)

| | Thermoplastic resin D | Composition of processing aid | | | | Concentration of processing aid in resin composition (A+B1+B2)/(D+A+B1+B2) (ppm) | Extrusion evaluation | | Storage stability |
|---|---|---|---|---|---|---|---|---|---|
| | | Lubricant A | Resin B1 | Resin B2 | Mass ratio in processing aid (A/B1/B2) | | Disappearance of MF | DBU (5 grades) | Bleeding out |
| Example 18 | m-LLDPE-1 | PE-wax#1 | EVOH | - | 10/90/0 | 1500 | Disappeared | 2 | |
| Example 19 | m-LLDPE-1 | PE-wax#1 | EVOH | - | 60/40/0 | 1500 | Disappeared | 4 | |
| Example 20 | m-LLDPE-1 | PE-wax#1 | EVOH | - | 20/80/0 | 1500 | Disappeared | 3 | |
| Example 21 | m-LLDPE-1 | PE-wax#1 | EVOH | - | 40/60/0 | 1500 | Disappeared | 3 | |
| Example 22 | m-LLDPE-1 | PE-wax#1 | EVOH | - | 30/70/0 | 1500 | Disappeared | 3 | Yes |
| Example 23 | m-LLDPE-1 | PE-wax#2 | EVOH | - | 10/90/0 | 1500 | Disappeared | 2 | |
| Example 24 | m-LLDPE-1 | PE-wax#3 | EVOH | - | 10/90/0 | 1500 | Disappeared | 2 | |
| Example 25 | m-LLDPE-1 | PE-wax#4 | EVOH | - | 10/90/0 | 1500 | Disappeared | 4 | |
| Example 26 | m-LLDPE-1 | Zn-St | EVOH | PLA | 2/5/93 | 1500 | Disappeared | 2 | |
| Example 27 | m-LLDPE-1 | Zn-St | EVOH | PLA | 2/63/35 | 1500 | Disappeared | 2 | |
| Example 28 | m-LLDPE-1 | Zn-St | EVOH | PLA | 70/5/25 | 1500 | Disappeared | 3 | |
| Example 29 | m-LLDPE-1 | Zn-St | EVOH | PLA | 12/63/25 | 1500 | Disappeared | 2 | |
| Example 30 | m-LLDPE-1 | Zn-St | EVOH | PLA | 10/18/72 | 1500 | Disappeared | 1 | No |
| Example 31 | m-LLDPE-1 | Zn-St | EVOH | PLA | 4/19/77 | 1500 | Disappeared | 1 | No |
| Example 32 | m-LLDPE-1 | Zn-St | EVOH | PLA | 10/10/80 | 1500 | Disappeared | 1 | |
| Example 33 | m-LLDPE-1 | Zn-St | EVOH | PLA | 4/10/86 | 1500 | Disappeared | 1 | |
| Example 34 | m-LLDPE-1 | Zn-St | EVOH | PLA | 4/19/77 | 1000 | Disappeared | 1 | |
| Example 35 | m-LLDPE-1 | Zn-St | EVOH | PLA | 4/19/77 | 600 | Disappeared | 1 | |
| Example 36 | m-LLDPE-1 | Zn-St | EVOH | PLA | 4/19/77 | 400 | Disappeared | 2 | |
| Example 37 | m-LLDPE-1 | Zn-St | EVOH | PLA | 4/19/77 | 300 | Disappeared | 3 | |
| Example 38 | m-LLDPE-1 | Zn-St | EVOH | PLA | 4/19/77 | 6000 | Disappeared | 1 | |
| Example 39 | m-LLDPE-1 | Zn-St | EVOH | PLA | 4/19/77 | 10000 | Disappeared | 2 | |

(continued)

| | Thermoplastic resin D | Composition of processing aid | | | | Concentration of processing aid in resin composition (A+B1+B2)/(D+A+B1+B2) (ppm) | Extrusion evaluation | | Storage stability |
|---|---|---|---|---|---|---|---|---|---|
| | | Lubricant A | Resin B1 | Resin B2 | Mass ratio in processing aid (A/B1/B2) | | Disappearance of MF | DBU (5 grades) | Bleeding out |
| Example 40 | m-LLDPE-1 | Zn-St | EVOH | PLA | 4/19/77 | 20000 | Disappeared | 3 | |
| Example 41 | m-LLDPE-1 | Zn-St | EVOH | PLA | 4/19/77 | 30000 | Disappeared | 4 | |
| Example 42 | ZN-LLDPE-1 | Zn-St | EVOH | PLA | 4/19/77 | 1500 | Disappeared | 1 | |

[Table 2]

| | Thermoplastic resin D | Composition of processing aid | | | | Concentration of processing aid in resin composition (A+B1+B2)/(D+A+B1+B2) (ppm) | Extrusion evaluation | | Storage stability |
|---|---|---|---|---|---|---|---|---|---|
| | | Lubricant A | Resin B1 | Resin B2 | Mass ratio in processing aid (A/B1/B2) | | Disappearance of MF | DBU (5 grades) | Bleeding out |
| Example 43 | ZN-LLDPE-1 | Mg-C18(OH) | EVOH | PLA | 2/5/93 | 1500 | Disappeared | 2 | |
| Example 44 | ZN-LLDPE-1 | Mg-C18(OH) | EVOH | PLA | 2/63/35 | 1500 | Disappeared | 2 | |
| Example 45 | ZN-LLDPE-1 | Mg-C18(OH) | EVOH | PLA | 70/5/25 | 1500 | Disappeared | 3 | |
| Example 46 | ZN-LLDPE-1 | Mg-C18(OH) | EVOH | PLA | 12/63/25 | 1500 | Disappeared | 2 | |
| Example 47 | ZN-LLDPE-1 | Mg-C18(OH) | EVOH | PLA | 10/18/72 | 1500 | Disappeared | 1 | |
| Example 48 | ZN-LLDPE-1 | Mg-C18(OH) | EVOH | PLA | 4/19/77 | 1500 | Disappeared | 1 | |
| Example 49 | ZN-LLDPE-1 | Mg-C18(OH) | EVOH | PLA | 10/10/80 | 1500 | Disappeared | 1 | |
| Example 50 | ZN-LLDPE-1 | Mg-C18(OH) | EVOH | PLA | 4/10/86 | 1500 | Disappeared | 1 | |
| Example 51 | ZN-LLDPE-1 | Mg-C18(OH) | EVOH | PBS | 2/5/93 | 1500 | Disappeared | 3 | |
| Example 52 | ZN-LLDPE-1 | Mg-C18(OH) | EVOH | PBS | 2/63/35 | 1500 | Disappeared | 3 | |
| Example 53 | ZN-LLDPE-1 | Mg-C18(OH) | EVOH | PBS | 70/5/25 | 1500 | Disappeared | 4 | |
| Example 54 | ZN-LLDPE-1 | Mg-C18(OH) | EVOH | PBS | 12/63/25 | 1500 | Disappeared | 3 | |
| Example 55 | ZN-LLDPE-1 | Mg-C18(OH) | EVOH | PBS | 10/18/72 | 1500 | Disappeared | 2 | |
| Example 56 | ZN-LLDPE-1 | Mg-C18(OH) | EVOH | PBS | 4/19/77 | 1500 | Disappeared | 2 | |
| Example 57 | ZN-LLDPE-1 | Mg-C18(OH) | EVOH | PBS | 10/10/80 | 1500 | Disappeared | 2 | |
| Example 58 | ZN-LLDPE-1 | Polysorbate60 | EVOH | PLA | 2/5/93 | 1500 | Disappeared | 2 | |
| Example 59 | ZN-LLDPE-1 | Polysorbate60 | EVOH | PLA | 2/63/35 | 1500 | Disappeared | 2 | |
| Example 60 | ZN-LLDPE-1 | Polysorbate60 | EVOH | PLA | 70/5/25 | 1500 | Disappeared | 3 | |
| Example 61 | ZN-LLDPE-1 | Polysorbate60 | EVOH | PLA | 12/63/25 | 1500 | Disappeared | 2 | |
| Example 62 | ZN-LLDPE-1 | Polysorbate60 | EVOH | PLA | 10/18/72 | 1500 | Disappeared | 1 | |
| Example 63 | ZN-LLDPE-1 | Polysorbate60 | EVOH | PLA | 4/19/77 | 1500 | Disappeared | 1 | |
| Example 64 | ZN-LLDPE-1 | Polysorbate60 | EVOH | PLA | 10/10/80 | 1500 | Disappeared | 1 | |
| Example 65 | ZN-LLDPE-1 | Polysorbate60 | EVOH | PLA | 4/10/86 | 1500 | Disappeared | 1 | |

(continued)

| | Thermoplastic resin D | Composition of processing aid | | | | Concentration of processing aid in resin composition (A+B1+B2)/(D+A+B1+B2) (ppm) | Extrusion evaluation | | Storage stability |
|---|---|---|---|---|---|---|---|---|---|
| | | Lubricant A | Resin B1 | Resin B2 | Mass ratio in processing aid (A/B1/B2) | | Disappearance of MF | DBU (5 grades) | Bleeding out |
| Example 66 | ZN-LLDPE-1 | PE-wax#1 | EVOH | PLA | 2/5/93 | 1500 | Disappeared | 3 | |
| Example 67 | ZN-LLDPE-1 | PE-wax#1 | EVOH | PLA | 2/63/35 | 1500 | Disappeared | 3 | |
| Example 68 | ZN-LLDPE-1 | PE-wax#1 | EVOH | PLA | 70/5/25 | 1500 | Disappeared | 4 | |
| Example 69 | ZN-LLDPE-1 | PE-wax#1 | EVOH | PLA | 12/63/25 | 1500 | Disappeared | 3 | |
| Example 70 | ZN-LLDPE-1 | PE-wax#1 | EVOH | PLA | 10/18/72 | 1500 | Disappeared | 2 | |
| Example 71 | ZN-LLDPE-1 | PE-wax#1 | EVOH | PLA | 4/19/77 | 1500 | Disappeared | 2 | |
| Example 72 | ZN-LLDPE-1 | PE-wax#1 | EVOH | PLA | 10/10/80 | 1500 | Disappeared | 2 | |
| Example 73 | ZN-LLDPE-1 | PE-wax#1 | EVOH | PLA | 4/10/86 | 1500 | Disappeared | 2 | |
| Example 74 | ZN-LLDPE-1 | PE-wax#2 | EVOH | PLA | 10/18/72 | 1500 | Disappeared | 2 | |
| Example 75 | ZN-LLDPE-1 | PE-wax#3 | EVOH | PLA | 10/18/72 | 1500 | Disappeared | 2 | |
| Example 76 | ZN-LLDPE-1 | PE-wax#4 | EVOH | PLA | 10/18/72 | 1500 | Disappeared | 3 | |
| Example 77 | m-LLDPE-1 | Zn-St | PLA | - | 10/90/0 | 1500 | Disappeared | 1 | |
| Example 78 | m-LLDPE-1 | Zn-St | PLA | - | 60/40/0 | 1500 | Disappeared | 3 | |
| Example 79 | m-LLDPE-1 | Zn-St | PLA | - | 20/80/0 | 1500 | Disappeared | 2 | |
| Example 80 | m-LLDPE-1 | Zn-St | PLA | - | 40/60/0 | 1500 | Disappeared | 2 | |
| Example 81 | m-LLDPE-1 | Zn-St | PLA | - | 30/70/0 | 1500 | Disappeared | 2 | Yes |
| Example 82 | m-LLDPE-1 | Zn-St | PLA | - | 30/70/0 | 1000 | Disappeared | 2 | |
| Example 83 | m-LLDPE-1 | Zn-St | PBS | - | 30/70/0 | 600 | Disappeared | 3 | |
| Example 84 | m-LLDPE-1 | Zn-St | PBS | - | 10/90/0 | 1500 | Disappeared | 2 | |
| Example 85 | m-LLDPE-1 | Zn-St | PBS | - | 60/40/0 | 1500 | Disappeared | 4 | |
| Example 86 | m-LLDPE-1 | Zn-St | PBS | - | 20/80/0 | 1500 | Disappeared | 3 | |
| Example 87 | m-LLDPE-1 | Zn-St | PBS | - | 40/60/0 | 1500 | Disappeared | 3 | |

[Table 3]

| | Thermoplastic resin D | Composition of processing aid | | | | | Concentration of processing aid in resin composition (A+B1+B2)/(D+A+B1+B2) (ppm) | Extrusion evaluation | |
|---|---|---|---|---|---|---|---|---|---|
| | | Thermoplastic resin C | Lubricant A | Resin B1 | Resin B2 | Mass ratio in processing aid (A/B1/B2) | | Disappearance of MF | DBU (5 grades) |
| Example 88 | m-LLDPE-1 | m-LLDPE-2 | Zn-St | EVOH | PLA | 4/19/77 | 1500 | Disappeared | 1 |
| Example 89 | m-LLDPE-1 | ZN-LLDPE-2 | Zn-St | EVOH | PLA | 4/19/77 | 1500 | Disappeared | 1 |
| Example 90 | ZN-LLDPE-1 | ZN-LLDPE-2 | Zn-St | EVOH | PLA | 4/19/77 | 1500 | Disappeared | 1 |

[Table 4]

| | Thermoplastic resin D | Composition of processing aid | | | | | Concentration of processing aid in resin composition (A+B1+B2+-E)/(E+D+A+-B1+B2) (ppm) | Concentration of different additive in resin composition E/(E+D+A+B1+B2) (ppm) | Extrusion evaluation | |
|---|---|---|---|---|---|---|---|---|---|---|
| | | Different additive E | Lubricant A | Resin B1 | Resin B2 | Mass ratio in processing (A/B1/B2) | | | Disappearance of MF | DBU (5 grades) |
| Example 91 | m-LLDPE-1 | FEG-1 | Zn-St | EVOH | PLA | 4/19/77 | 2000 | 500 | Disappeared | 1 |
| Example 92 | m-LLDPE-1 | PCL | Zn-St | EVOH | PLA | 4/19/77 | 2000 | 500 | Disappeared | 1 |
| Example 93 | m-LLDPE-1 | MB50-002 | Zn-St | EVOH | PLA | 4/19/77 | 2000 | 500 | Disappeared | 1 |
| Example 94 | m-LLDPE-1 | Genioplast Pellet S | Zn-St | EVOH | PLA | 4/19/77 | 2000 | 500 | Disappeared | 1 |
| Example 95 | m-LLDPE-1 | Pebax MV 1072 | Zn-St | EVOH | PLA | 4/19/77 | 2000 | 500 | Disappeared | 1 |

Based on the results in the examples, the effect of the invention of the disclosure is presumably achieved owing to the following mechanism.

The presence of a functional group in the melted resin (B) promotes interaction between the resin (B) and the metal on the inner surface of the extruder, so that the resin (B) adheres to the metal surface on the inner surface of the extruder to form a coating layer. This coating layer presumably improves the flowability of the matrix resin (LLDPE).

The combination of the resin (B) and the lubricant (A) is believed to have a synergistic effect, significantly improving the processibility.

## Claims

1. A processing aid comprising:

   a lubricant (A); and
   a resin (B),
   the resin (B) comprising a structural unit represented by the following formula 1:

   $$-X-(CR^1R^2)_n-Y-(CR^3R^4)_m-Z- \quad \text{(formula 1)}$$

   wherein X is a single bond or a divalent group optionally containing a functional group;
   Y and Z are each independently a group constituted by at least one selected from the group consisting of a single bond, -O-, -C(=O)-, -C(=O)O-, -OC(=O)O-, -C(=NR')-, - C(=NR')O-, -OC(=NR')O-, -S-, -S(=O)-, -S(=O)O-, -OS(=O)O-, $-S(=O)_2-$, $-S(=O)_2O-$, $-OS(=O)_2O-$, -P(=O)-, -P(=O)O-, - OP(=O)O-, $-P(=O)_2-$, $-P(=O)_2O-$, $-OP(=O)_2O-$, -NR'-, and - C(OR')R'-, wherein R's at respective occurrences are each independently a hydrogen atom or a C1-C10 hydrocarbon group;
   $R^1$, $R^2$, $R^3$, and $R^4$ are each independently a hydrogen atom or a C1-C10 hydrocarbon group; and
   n and m are each independently an integer of 0 to 10,
   with at least one of X, Y, or Z being -C(=O)-, - C(=O)O-, -OC(=O)O-, or -C(OR')R'-.

2. The processing aid according to claim 1,
   wherein the processing aid is substantially free from fluorine.

3. The processing aid according to claim 1 or 2,
   wherein the lubricant (A) includes at least one selected from the group consisting of a wax, an alcohol, and a surfactant.

4. The processing aid according to any one of claims 1 to 3,
   wherein the lubricant (A) includes at least one selected from the group consisting of a sugar-based surfactant, metal soap, and polyethylene wax.

5. The processing aid according to any one of claims 1 to 4,

   wherein, in the formula 1, X is a divalent group constituted by at least one selected from the group consisting of $X^1$ and $X^2$,
   wherein $X^1$ is a group constituted by at least one selected from the group consisting of -C(=O)-, -C(=NR')-, - $S(=O)_2$-, -NR'-, -CR'R'-, and -C(OR')R'-, wherein R's at respective occurrences are each independently a hydrogen atom or a C1-C10 hydrocarbon group; and
   $X^2$ is a C1-C12 aromatic hydrocarbon group optionally containing a substituent.

6. The processing aid according to claim 5,
   wherein, in the formula 1, X is a divalent group containing at least one selected from the group consisting of -C(=O)-, -CR'R'-, and -C(OR')R'-, wherein R's at respective occurrences are each independently a hydrogen atom or a C1-C10 hydrocarbon group.

7. The processing aid according to any one of claims 1 to 6,
   wherein, in the formula 1, Y and Z are each independently a group constituted by at least one selected from the group consisting of a single bond, -O-, -C(=O)-, - C(=O)O-, -C(=NR')-, -C(=NR')O-, -S-, $-S(=O)_2-$, $-S(=O)_2O-$, - NR'-, and -C(OR')R'-, wherein R's at respective occurrences are each independently a hydrogen atom or a C1-C10 hydrocarbon group.

**8.** The processing aid according to claim 7,
wherein, in the formula 1, Y and Z are each independently a group constituted by at least one selected from the group consisting of a single bond, -O-, -C(=O)-, and -C(=O)O-.

**9.** The processing aid according to any one of claims 1 to 8,
wherein the resin (B) has a melting point of 65°C or higher.

**10.** The processing aid according to any one of claims 1 to 9,
wherein the resin (B) includes at least one selected from the group consisting of polylactic acid, polybutylene succinate, an ethylene-vinyl alcohol copolymer, and polybutylene succinate adipate.

**11.** The processing aid according to any one of claims 1 to 10,

wherein the lubricant (A) includes at least one selected from the group consisting of a polysorbate, zinc stearate, magnesium 12-hydroxystearate, and polyethylene wax, and
the resin (B) includes at least one selected from the group consisting of polylactic acid, polybutylene succinate, and an ethylene-vinyl alcohol copolymer.

**12.** A masterbatch comprising:

the processing aid according to any one of claims 1 to 11; and
a thermoplastic resin (C).

**13.** The masterbatch according to claim 12,
wherein the thermoplastic resin (C) includes a polyolefin resin.

**14.** The masterbatch according to claim 12 or 13,

wherein the thermoplastic resin (C) includes at least one selected from the group consisting of metallocene-catalyzed linear low-density polyethylene and Ziegler-Natta-catalyzed linear low-density polyethylene, and
a mass ratio of the thermoplastic resin (C) to the processing aid (thermoplastic resin (C):processing aid) is 92:8 to 70:30.

**15.** A thermoplastic resin composition comprising:

at least one of the processing aid according to any one of claims 1 to 11 or the masterbatch according to any one of claims 12 to 14; and
a thermoplastic resin (D).

**16.** The thermoplastic resin composition according to claim 15,
wherein the thermoplastic resin (D) includes a polyolefin resin.

**17.** The thermoplastic resin composition according to claim 15 or 16,
wherein the thermoplastic resin (D) includes at least one selected from the group consisting of metallocene-catalyzed linear low-density polyethylene and Ziegler-Natta-catalyzed linear low-density polyethylene, and the processing aid is contained in an amount of 0.02 to 3% by mass.

**18.** A molded article comprising the thermoplastic resin composition according to any one of claims 15 to 17.

**19.** The molded article according to claim 18,
wherein the molded article is in a form of a tube, a film, or a sheet.

**20.** A method for producing the processing aid according to any one of claims 1 to 11, comprising a mixing step and an ejecting step.

**21.** A method for producing the masterbatch according to any one of claims 12 to 14, comprising a mixing step and an

ejecting step.

**22.** A method for producing the thermoplastic resin composition according to any one of claims 15 to 17, comprising a mixing step and an ejecting step.

**23.** A method for producing the molded article according to claim 18 or 19, comprising a molding step.

## INTERNATIONAL SEARCH REPORT

International application No. **PCT/JP2024/046196**

### A. CLASSIFICATION OF SUBJECT MATTER

***C08L 101/02***(2006.01)i; ***C08J 3/22***(2006.01)i; ***C08K 5/00***(2006.01)i; ***C08L 101/00***(2006.01)i
FI: C08L101/02; C08K5/00; C08J3/22 CES; C08L101/00

According to International Patent Classification (IPC) or to both national classification and IPC

### B. FIELDS SEARCHED

Minimum documentation searched (classification system followed by classification symbols)

C08K3/00-13/08; C08L1/00-101/14; C08L101/16; C08J3/00-3/28;99/00;C08J5/00-5/02;5/12-5/22

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2010/079851 A2 (KURARAY CO., LTD.) 15 July 2010 (2010-07-15) claims, examples | 1-10, 12-23 |
| Y | | 11 |
| X | CN 102516723 A (KINGFA SCIENCE & TECHNOLOGY CO., LTD.) 27 June 2012 (2012-06-27) claims, examples | 1-10 |
| Y | | 11 |
| A | | 12-23 |
| X | JP 2005-146200 A (MITSUI CHEMICALS, INC.) 09 June 2005 (2005-06-09) claims, examples | 1-3, 5-10 |
| A | | 4, 11-23 |
| Y | JP 2022-75685 A (TOYO INK SC HOLDINGS CO., LTD.) 18 May 2022 (2022-05-18) claims, paragraphs [0078]-[0084] | 11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 March 2025** | **25 March 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/046196**

| Patent document cited in search report | Publication date (day/month/year) | Patent family member(s) | Publication date (day/month/year) |
|---|---|---|---|
| WO 2010/079851 A2 | 15 July 2010 | US 2011/0091734 A1<br>claims, examples<br>EP 2275481 A2 | |
| CN 102516723 A | 27 June 2012 | (Family: none) | |
| JP 2005-146200 A | 09 June 2005 | (Family: none) | |
| JP 2022-75685 A | 18 May 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H01215840 A
- US 20230031000 A1


### Non-patent literature cited in the description


- Organische Zwischenverbindungen, Polymere. **WINNACKER** ; **KUCHLER**. Chemische Technik. Wiley-VCH, 2005, vol. 5
- **K. J. RYAN et al.** *Journal of Vinyl & Additive Technology*, March 2000, vol. 6 (1), 7-19